(19) Europäisches Patentamt / European Patent Office / Office européen des brevets

(11) EP 3 617 272 B1

(12) # EUROPEAN PATENT SPECIFICATION

(45) Date of publication and mention of the grant of the patent:
**22.05.2024 Bulletin 2024/21**

(21) Application number: **18790749.8**

(22) Date of filing: **23.04.2018**

(51) International Patent Classification (IPC):
***C08L 69/00*** *(2006.01)* ***C08G 64/02*** *(2006.01)*
***C08K 3/40*** *(2006.01)* ***C08K 7/14*** *(2006.01)*

(52) Cooperative Patent Classification (CPC):
(C-Sets available)
**C08G 64/0208; C08G 64/307; C08K 3/40; C08K 7/14** (Cont.)

(86) International application number:
**PCT/JP2018/016474**

(87) International publication number:
**WO 2018/199033 (01.11.2018 Gazette 2018/44)**

(54) **GLASS FILLER-CONTAINING POLYCARBONATE RESIN COMPOSITION, AND MOLDED BODY THEREOF**

GLASFÜLLMITTELHALTIGE POLYCARBONATHARZZUSAMMENSETZUNG UND FORMKÖRPER DARAUS

COMPOSITION DE RÉSINE DE POLYCARBONATE CONTENANT UNE CHARGE DE VERRE ET CORPS MOULÉ CORRESPONDANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.04.2017 JP 2017090682**

(43) Date of publication of application:
**04.03.2020 Bulletin 2020/10**

(73) Proprietors:
- **Idemitsu Kosan Co.,Ltd.**
  **Tokyo 100-8321 (JP)**
- **Asahi Fiber Glass Co., Ltd.**
  **Tokyo 101-0045 (JP)**

(72) Inventors:
- **YAMAO, Shinobu**
  **Ichihara-shi**
  **Chiba 299-0193 (JP)**
- **YABUKAMI, Minoru**
  **Ichihara-shi**
  **Chiba 299-0193 (JP)**
- **SEKINE, Keiji**
  **Tokyo 101-0045 (JP)**
- **ZHAO, Peng**
  **Tokyo 101-0045 (JP)**
- **HAYATA, Koji**
  **Tokyo 101-0045 (JP)**

(74) Representative: **Hoffmann Eitle**
**Patent- und Rechtsanwälte PartmbB**
**Arabellastraße 30**
**81925 München (DE)**

(56) References cited:

| | |
|---|---|
| EP-A1- 1 757 422 | EP-A1- 1 785 402 |
| EP-A1- 2 168 926 | EP-A1- 2 915 849 |
| WO-A1-2005/110695 | JP-A- H05 155 638 |
| JP-A- 2006 022 235 | JP-A- 2006 022 236 |
| JP-A- 2006 169 324 | JP-A- 2006 348 299 |
| JP-A- 2007 153 729 | JP-A- 2010 202 468 |
| US-A1- 2010 256 279 | US-A1- 2011 021 678 |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08K 3/40, C08L 69/00**

## Description

### Technical Field

The present invention relates to a glass filler-containing polycarbonate-based resin composition and a molded body thereof.

### Background Art

A molded body formed of a polycarbonate resin has high transparency, excellent heat resistance, and excellent mechanical strength, such as impact resistance. Accordingly, the molded body has been widely used as an industrial transparent material in the fields of, for example, electricity, machinery, and automobiles. In addition, the molded body is used as a plastic for an optical material in, for example, a lens or an optical disc.

The polycarbonate resin molded body is excellent in mechanical strength. Meanwhile, when a higher mechanical strength is required, the mechanical strength may be improved by adding, for example, a glass filler.

However, a molded body of a polycarbonate resin composition containing a general glass filler has involved a problem in that its transparency is reduced by the glass filler. In order to cope with the problem, an attempt has been made to bring the refractive indices of a polycarbonate resin and the glass filler close to each other through the change of the composition of the polycarbonate resin, the addition of an additive to the polycarbonate resin composition, or the change of the composition of the glass filler.

Specifically, in Patent Document 1, there is a disclosure of a polycarbonate resin composition containing a polycarbonate-based resin having a specific structure and a glass filler having specific composition.

### Citation List

#### Patent Document

[Patent Document 1] WO 2014/069659 A1

### Summary of Invention

#### Technical Problem

In Patent Document 1, the transparency of a molded body is improved by matching differences in refractive index between the polycarbonate-based resin and the glass filler at respective wavelengths (486.1 nm, 589.3 nm, and 656.3 nm) with one another. However, the transparency is still insufficient in a field where higher transparency is required. In addition, the inventors of the present invention have made an investigation, and as a result, have found that the moist heat resistance of the molded body is insufficient.

An object of the present invention is to provide a glass filler-containing polycarbonate-based resin composition that can provide a molded body having extremely excellent transparency, and a molded body excellent in transparency.

#### Solution to Problem

The inventors of the present invention have made extensive investigations with a view to achieving the object, and as a result, have found that a polycarbonate-based resin composition including a glass filler having specific composition and a polycarbonate-based resin having a specific structure, and a molded body thereof achieve the object.

That is, the present invention provides a polycarbonate-based resin composition as defined in the claims, and a molded body, including the polycarbonate-based resin composition as defined herein.

#### Advantageous Effects of Invention

According to the present invention, the glass filler-containing polycarbonate-based resin composition that can provide a molded body having extremely excellent transparency, and the molded body excellent in transparency can be provided. Such molded body may be suitably used as a material for a transparent constituent part including a window of an automobile, a building, or the like.

Description of Embodiments

The inventors of the present invention have made extensive investigations, and as a result, have found that high transparency is obtained by further reducing a difference in refractive index between a polycarbonate-based resin and a glass filler at each wavelength. The difference in refractive index is largely changed by a slight change in composition or structure of the resin or the filler, and hence its handling is extremely difficult. The inventors have narrowed the structure of the polycarbonate-based resin down to a further specific structure and have further investigated the composition of the glass filler, and as a result, have found a polycarbonate-based resin composition that can provide a molded body having excellent transparency. Detailed description is given below.

The terms "refractive index at each wavelength" and "Abbe number" as used herein refer to values measured and calculated in conformity with JIS K 7142:2014, Method B.

The term "XX to YY" as used herein means "from XX or more to YY or less." In addition, in this description, a specification considered to be preferred may be arbitrarily adopted, and a combination of preferred specifications is more preferred.

<Polycarbonate-based Resin>

A polycarbonate-based resin composition of the present invention includes an aliphatic polycarbonate-based resin (A) containing a repeating unit (A-1) represented by the general formula (1). Specifically, the repeating unit (A-1) is derived from an aliphatic dihydroxy compound to be described later.

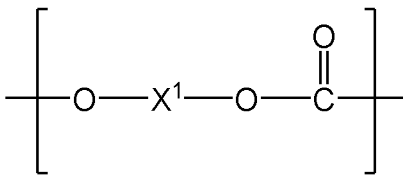
(1)

wherein $X^1$ represents a divalent aliphatic hydrocarbon group having 2 to 20 carbon atoms, or a divalent alicyclic hydrocarbon group having 4 to 22 carbon atoms, and the divalent aliphatic hydrocarbon group and the divalent alicyclic hydrocarbon group may each contain at least one heteroatom selected from an oxygen atom, a nitrogen atom, and a sulfur atom, and/or at least one halogen atom selected from a fluorine atom, a chlorine atom, a bromine atom, and an iodine atom.

The divalent alicyclic hydrocarbon group containing a heteroatom in $X^1$ is, for example, a divalent saturated heterocyclic group that has 4 to 20 carbon atoms and contains oxygen or nitrogen.

Specific examples of the divalent group represented by $X^1$ include divalent groups each obtained by removing two hydroxyl groups from an aliphatic dihydroxy compound to be described later. Among them, a divalent residue obtained by removing two hydroxyl groups from an aliphatic dihydroxy compound represented by the following general formula (11) is preferred.

The repeating unit (A-1) preferably includes one or more selected from the group consisting of repeating units represented by the following general formulae (a-1), (a-2), and (a-3).

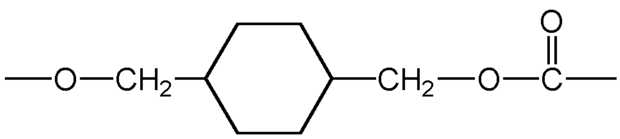
(a-1)

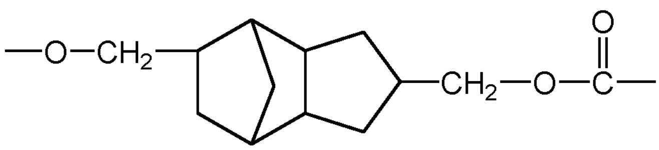
(a-2)

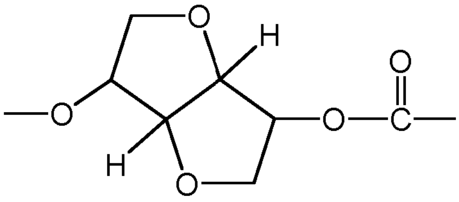

(a-3)

The total content of the repeating units represented by the general formula (a-1), the general formula (a-2), and/or the general formula (a-3) in the repeating unit (A-1) is preferably 80 mol% or more, more preferably 90 mol% or more, still more preferably 100 mol%. The ratio of the repeating unit represented by the general formula (a-3) among them to the repeating unit (A-1) is particularly preferably 40 mol% or more. When the ratio of the repeating unit represented by the general formula (a-3) is 40 mol% or more, a difference in refractive index between the resin and a glass filler in the composition at each wavelength can be reduced, and the heat resistance of a molded body of the composition becomes excellent.

(Aliphatic Dihydroxy Compound)

The repeating unit (A-1) represented by the general formula (1) is derived from an aliphatic dihydroxy compound.

The aliphatic dihydroxy compound is, for example, a compound represented by the following general formula (11). The aliphatic dihydroxy compounds may be used alone or in combination thereof.

$$HO{-}\!(CH_2)_a{-}R^1{-}(CH_2)_a{-}OH \qquad (11)$$

wherein

in the general formula (11), $R^1$ represents an alkylene group having 2 to 18, preferably 2 to 10, more preferably 3 to 6 carbon atoms, a cycloalkylene group having 4 to 20, preferably 5 to 20 carbon atoms, or a divalent oxygen- or nitrogen-containing saturated heterocyclic group having 4 to 20, preferably 5 to 20 carbon atoms, and may contain at least one heteroatom selected from an oxygen atom, a nitrogen atom, and a sulfur atom, and at least one halogen atom selected from a fluorine atom, a chlorine atom, a bromine atom, and an iodine atom, and a represents an integer of 0 or 1.

Examples of the alkylene group having 2 to 18 carbon atoms include an ethylene group, a n-propylene group, an isopropylene group, a n-butylene group, an isobutylene group, a n-pentylene group, a n-hexylene group, a n-heptylene group, a n-octylene group, a 2-ethylhexylene group, a n-nonylene group, a n-decylene group, a n-undecylene group, a n-dodecylene group, a n-tridecylene group, a n-tetradecylene group, a n-pentadecylene group, a n-hexadecylene group, a n-heptadecylene group, and a n-octadecylene group. Examples of the cycloalkylene group having 4 to 20 carbon atoms include a cyclopentylene group, a cyclohexylene group, a cyclooctylene group, a cyclodecylene group, a cyclotetradecylene group, an adamantylene group, a bicycloheptylene group, a bicyclodecylene group, and a tricyclodecylene group.

Examples of the aliphatic dihydroxy compound include: dihydroxy compounds each having a chain aliphatic hydrocarbon group, such as ethylene glycol, 1,3-propanediol, 1,2-propanediol, 1,4-butanediol, 1,5-pentanediol, 1,6-hexanediol, 1,7-heptanediol, 1,8-octanediol, 1,10-decanediol, 2,2-dimethylpropane-1,3-diol, diethylene glycol, triethylene glycol, tetraethylene glycol, octaethylene glycol, dipropylene glycol, *N*-methyldiethanolamine, and p-xylylene glycol; dihydroxy compounds each having an alicyclic hydrocarbon group, such as 1,2-cyclohexanediol, 1,3-cyclohexanediol, 1,4-cyclohexanediol, 1,2-cyclohexanedimethanol, 1,3-cyclohexanedimethanol, 1,4-cyclohexanedimethanol, 2,6-decalindiol, 1,5-decalindiol, 2,3-decalindiol, 2,6-decalindimethanol, 1,5-decalindimethanol, 2,3-decalindimethanol, 2,3-norbornanediol, 2,5-norbornanediol, 2,3-norbornanedimethanol, 2,5-norbornanedimethanol, 2,2-bis(4-hydroxycyclohexyl)-propane, 1,3-adamantanediol, 1,3-adamantanedimethanol, and tricyclodecanedimethanol; condensed polycyclic ether diols, such as isosorbide; heterocyclic spiro compounds, such as 3,9-bis(2-hydroxyethyl)-2,4,8,10-tetraoxaspiro[5.5]undecane, 3,9-bis(2-hydroxy-1,1-dimethylethyl)-2,4,8,10-tetraoxaspiro [5.5]undecane, 3,9-bis(2-hydroxy-1,1-diethylethyl)-2,4,8,10-tetraoxaspiro[5.5]undecane, and 3,9-bis(2-hydroxy-1,1-dipropylethyl)-2,4,8,10-tetraoxaspiro[5.5]undecane; cyclic ether diols, such as 1,4-anhydroerythritol; cyclic acetal diols, such as 2-(5-ethyl-5-hydroxymethyl-1,3-dioxan-2-yl)-2-methylpropan-1-ol; *N*-heterocyclic diols, such as 3,4-pyrrolidinediol, 3,4-dimethylpiperidinediol, *N*-ethyl-3,4-piperidinediol, and *N*-ethyl-3,5-piperidinediol; and S-heterocyclic diols, such as deoxythiofructose.

Among those aliphatic dihydroxy compounds, 1,4-cyclohexanedimethanol, tricyclodecanedimethanol, 1,3-adamantanedimethanol, 2,2-bis(4-hydroxycyclohexyl)-propane, 3,9-bis(2-hydroxy-1,1-dimethylethyl)-2,4,8,10-tetraoxaspiro[5.5]undecane, 2-(5-ethyl-5-hydroxymethyl-1,3-dioxan-2-yl)-2-methylpropan-1-ol, isosorbide, 1,3-propanediol, 1,4-butanediol, and 1,6-hexanediol are preferred from the viewpoints of ease in production, properties, and the variety of applications. Among them, 1,4-cyclohexanedimethanol, tricyclodecanedimethanol, and isosorbide are more preferred from the viewpoints of heat resistance and a refractive index.

A method of purifying the aliphatic dihydroxy compound to be used in the present invention is not particularly limited. The compound may be preferably purified by any one of simple distillation, rectification, and recrystallization, or a combination of two or more of these approaches. It should be noted that a commercial product of the aliphatic dihydroxy compound contains a stabilizer or a deterioration product produced during its storage in some cases, and such content may adversely affect the quality of the polymer. When the polymer is obtained by using the aliphatic dihydroxy compound, it is preferred that the compound be purified again and used in a polymerization reaction immediately thereafter. When it is inevitable that the compound is stored after purification for a while before its use, the compound is preferably stored under a dry, light-shielded, and inert gas atmosphere having a temperature as low as 40°C or less before the use.

The aliphatic polycarbonate-based resin (A) preferably contains 1 mol% or more and 99 mol% or less of the repeating unit (A-1).

The aliphatic polycarbonate-based resin (A) does not have an aromatic carbonate repeating unit ($A^{AR}$-1) represented by the following general formula (2) in addition to the repeating unit (A-1) represented by the general formula (1) described above:

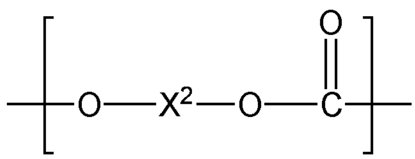

(2)

wherein
in the general formula (2), $X^2$ represents a hydrocarbon residue containing an aromatic group.

The hydrocarbon residue containing an aromatic group represented by $X^2$ is preferably a residue having such a structure that an aromatic hydrocarbon group is bonded to an oxygen atom adjacent to $X^2$. The hydrocarbon residue containing an aromatic group represented by $X^2$ may contain: at least one heteroatom selected from an oxygen atom, a nitrogen atom, a sulfur atom, and a silicon atom; at least one halogen atom selected from a fluorine atom, a chlorine atom, a bromine atom, and an iodine atom; and one or more kinds of groups selected from an aliphatic hydrocarbon group having 1 to 20 carbon atoms, an alicyclic hydrocarbon group having 5 to 20 carbon atoms, and an aromatic hydrocarbon group having 6 to 20 carbon atoms.

Specific examples of the hydrocarbon residue containing an aromatic group represented by $X^2$ include residues each obtained by removing two hydroxyl groups from an aromatic dihydroxy compound (dihydric phenol) to be described later.

(Aromatic Dihydroxy Compound)

As the aromatic dihydroxy compound, various compounds may be given. Among them, examples of the aromatic dihydroxy compound may include 2,2-bis(4-hydroxyphenyl)propane [bisphenol A], bis(4-hydroxyphenyl)methane, 1,1-bis(4-hydroxyphenyl)ethane, 2,2-bis(4-hydroxy-3,5-dimethylphenyl)propane, 4,4'-dihydroxydiphenyl, bis(4-hydroxyphenyl)cycloalkane, bis(4-hydroxyphenyl) oxide, bis(4-hydroxyphenyl) sulfide, bis(4-hydroxyphenyl) sulfone, bis(4-hydroxyphenyl) sulfoxide, and bis(4-hydroxyphenyl) ketone. Other examples thereof may include hydroquinone, resorcin, and catechol. Those compounds may be used alone or in combination thereof. Among them, bis(hydroxyphenyl)alkanes are preferred, and bisphenol A is particularly suitable.

The incorporation of the aliphatic carbonate repeating unit (A-1) can reduce the difference in refractive index between the resin and the glass filler at each wavelength, and hence can provide a molded body excellent in transparency.

The composition of the polycarbonate-based resin (A) according to the present invention may contain a repeating unit derived from any other dihydroxy compound in addition to the repeating units (A-1) and ($A^{AR}$-1) as long as the effects of the resin are not impaired. The ratio of the other repeating unit is preferably 10 mol% or less with respect to the total number of moles of the repeating units (A-1) and ($A^{AR}$-1). The molar ratio is calculated through measurement by $^1$H-NMR.

The viscosity-average molecular weight of the polycarbonate-based resin (A) according to the present invention is preferably from 10,000 to 50,000. When the viscosity-average molecular weight falls within the range, balance between its mechanical properties and flowability is excellent. The viscosity-average molecular weight is more preferably from 12,000 to 35,000, still more preferably from 15,000 to 22,000. The viscosity-average molecular weight (Mv) is calculated from the following Schnell's equation by using a limiting viscosity [η] determined through the measurement of the viscosity of a methylene chloride solution (concentration: g/L) at 20°C with an Ubbelohde-type viscometer.

$$[\eta] = 1.23 \times 10^{-5} \times Mv^{0.83}$$

The refractive index of the aliphatic polycarbonate-based resin (A) according to the present invention needs to be 1.480 or more and 1.520 or less for light having a wavelength of 589.3 nm. When the refractive index is set within the range, the difference in refractive index between the resin and the glass filler to be described later at each wavelength can be reduced without limit.

The refractive index of the aliphatic polycarbonate-based resin (A) for light having a wavelength of 589.3 nm is preferably 1.500 or more and 1.519 or less, more preferably 1.501 or more and 1.516 or less, still more preferably 1.510 or more and 1.515 or less, particularly preferably 1.510 or more and 1.514 or less.

A difference (nF-nC) between the refractive index (nF) of the polycarbonate-based resin (A) for light having a wavelength of 486.1 nm and its refractive index (nC) for light having a wavelength of 656.3 nm is preferably 0.013 or less, more preferably 0.011 or less, still more preferably 0.010 or less.

The Abbe number (Vd) of the aliphatic polycarbonate-based resin (A) according to the present invention is preferably 45 or more, more preferably 48 or more, still more preferably 51 or more. When the Abbe number of the aliphatic polycarbonate-based resin (A) falls within the range, the chromatic aberration of the molded body to be obtained can be reduced.

The glass transition temperature of the aliphatic polycarbonate-based resin (A) according to the present invention is preferably from 75°C to 150°C, more preferably from 80°C to 140°C, still more preferably from 100°C to 130°C. When the glass transition temperature of the aliphatic polycarbonate-based resin (A) is excessively low, the number of applications where the resin can be used is limited. When the glass transition temperature is excessively high, the resin is poor in melt flowability in its molding and hence the molding cannot be performed in a temperature range where the extent of the decomposition of the polymer is small.

The aliphatic polycarbonate-based resin (A) according to the present invention may be a mixture of two or more kinds of resins as long as the effects of the present invention are not impaired.

A method of producing the aliphatic polycarbonate-based resin (A) is not particularly limited. Examples thereof may include an interfacial polycondensation method and a melting method (ester exchange method). That is, a resin produced by the interfacial polycondensation method involving causing the dihydroxy compound and a carbonate precursor, such as phosgene, to react with each other in the presence of a chain-end terminator or by causing the dihydroxy compound and a carbonic acid diester to react with each other in the presence of the chain-end terminator according to the ester exchange method or the like may be used. The aliphatic polycarbonate-based resin (A) according to the present invention is preferably produced by the ester exchange method.

(Carbonic Acid Diester)

The carbonic acid diester is at least one kind of compound selected from a diaryl carbonate compound, a dialkyl carbonate compound, and an alkyl aryl carbonate compound.

The diaryl carbonate compound is a compound represented by the following general formula (14) or a compound represented by the following general formula (15):

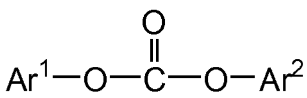

(14)

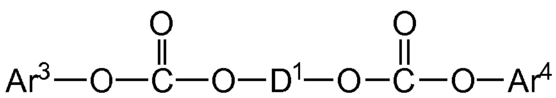

(15)

wherein

in the formula (14), $Ar^1$ and $Ar^2$ each represent an aryl group, and the groups may be identical to or different from each other, and

in the formula (15), $Ar^3$ and $Ar^4$ each represent an aryl group, and the groups may be identical to or different from each other, and $D^1$ represents a residue obtained by removing two hydroxyl groups from an aromatic dihydroxy compound.

The dialkyl carbonate compound is a compound represented by the following general formula (16) or a compound

represented by the following general formula (17):

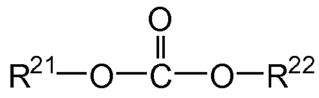

(16)

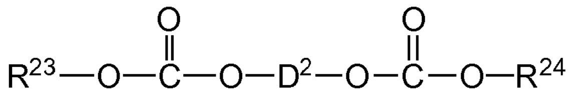

(17)

wherein

in the formula (16), $R^{21}$ and $R^{22}$ each represent an alkyl group having 1 to 20 carbon atoms or a cycloalkyl group having 4 to 20 carbon atoms, and the groups may be identical to or different from each other, and
in the formula (17), $R^{23}$ and $R^{24}$ each represent an alkyl group having 1 to 20 carbon atoms or a cycloalkyl group having 4 to 20 carbon atoms, and the groups may be identical to or different from each other, and $D^2$ represents a residue obtained by removing two hydroxyl groups from an aromatic dihydroxy compound.

The alkyl aryl carbonate compound is a compound represented by the following general formula (18) or a compound represented by the following general formula (19):

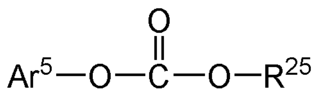

(18)

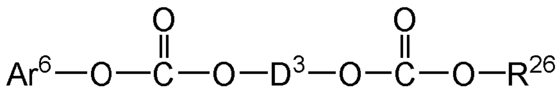

(19)

wherein

in the formula (18), $Ar^5$ represents an aryl group, and $R^{25}$ represents an alkyl group having 1 to 20 carbon atoms or a cycloalkyl group having 4 to 20 carbon atoms, and
in the formula (19), $Ar^6$ represents an aryl group, $R^{26}$ represents an alkyl group having 1 to 20 carbon atoms or a cycloalkyl group having 4 to 20 carbon atoms, and $D^3$ represents a residue obtained by removing two hydroxyl groups from an aromatic dihydroxy compound.

Specifically, examples of the diaryl carbonate compound include diphenyl carbonate, ditolyl carbonate, bis(chlorophenyl) carbonate, bis(*m*-cresyl) carbonate, dinaphthyl carbonate, bis(diphenyl) carbonate, and bisphenol A bisphenyl carbonate.
Examples of the dialkyl carbonate compound include diethyl carbonate, dimethyl carbonate, dibutyl carbonate, dicyclohexyl carbonate, and bisphenol A bismethyl carbonate.
Examples of the alkyl aryl carbonate compound include methyl phenyl carbonate, ethyl phenyl carbonate, butyl phenyl carbonate, cyclohexyl phenyl carbonate, and bisphenol A methyl phenyl carbonate.
In the present invention, one kind of the compounds is, or two or more kinds thereof are each, appropriately selected and used as the carbonic acid diester. Among them, diphenyl carbonate is preferably used.
In the ester exchange method, a raw material except the dihydroxy compound and the carbonic acid diester may be used.
For example, as a diester of a dihydroxy compound, there may be given, for example, diacetate of bisphenol A, dipropionate of bisphenol A, dibutyrate of bisphenol A, and dibenzoate of bisphenol A.
As a dicarbonate of a dihydroxy compound, there may be given, for example, bismethyl carbonate of bisphenol A, bisethyl carbonate of bisphenol A, and bisphenyl carbonate of bisphenol A.
As a monocarbonate of a dihydroxy compound, there may be given, for example, bisphenol A monomethyl carbonate, bisphenol A monoethyl carbonate, bisphenol A monopropyl carbonate, and bisphenol A monophenyl carbonate.

(Chain-end Terminator)

In the production of the polycarbonate-based resin described above, a chain-end terminator may be used as required. Any known chain-end terminator in the production of a polycarbonate-based resin may be used as the chain-end terminator. Specific examples thereof may include the following compounds: phenol, *p*-cresol, p-*tert*-butylphenol, *p-terh*-octylphenol, *p*-cumylphenol, *p*-nonylphenol, and *p-tert*-amylphenol. Those chain-end terminators may be used alone or in combination thereof.

(Branching Agent)

In the present invention, a branching agent may be used as required. Examples of the branching agent include: phloroglucin; trimellitic acid; 1, 1, 1-tris(4-hydroxyphenyl)ethane; 1-[α-methyl-α-(4'-hydroxyphenyl)ethyl]-4-[α',α'-bis(4"-hydroxyphenyl)ethyl]benzen e; α,α',α"-tris(4-hydroxyphenyl)-1,3,5-triisopropylbenzene; and isatinbis(*o*-cresol). The branching agents may be used alone or in combination thereof.

(Ester Exchange Method)

The aliphatic polycarbonate-based resin (A) may be produced by a typical ester exchange method. For example, the aliphatic polycarbonate-based resin (A) may be obtained by performing an ester exchange reaction through the use of the dihydroxy compound and the carbonic acid diester, and as required, the chain-end terminator, the branching agent, or the like. Specifically, the reaction may be advanced in conformity with a known ester exchange method. Hereinafter, a procedure and conditions for a preferred production method are specifically described.

The dihydroxy compound and the carbonic acid diester are subjected to an ester exchange reaction at such a ratio that the molar amount of the carbonic acid diester becomes from 0.9 time to 1.5 times as large as that of the dihydroxy compound. The molar ratio is preferably from 0.98 time to 1.20 times depending on the situation.

At the time of the ester exchange reaction, when the chain-end terminator is present in an amount within the range of from 0.05 mol% to 10 mol% with respect to the dihydroxy compound, a hydroxyl group terminal of a polycarbonate to be obtained is sealed, and hence a polycarbonate sufficiently excellent in heat resistance and water resistance is obtained. The total amount of such chain-end terminator may be added to a reaction system in advance, or the following may be adopted: part of the chain-end terminator is added to the reaction system in advance and the remainder thereof is added thereto along with the progress of the reaction. Further, in some cases, the total amount of the chain-end terminator may be added to the reaction system after the ester exchange reaction between the dihydroxy compound and the carbonic acid diester has partially progressed.

When the ester exchange reaction is performed, a reaction temperature is not particularly limited, and in normal cases, the temperature is selected from the range of from 100°C to 330°C, preferably from the range of from 180°C to 300°C. The following method is more preferably adopted: the temperature is gradually increased to the temperature region of from 180°C to 300°C in accordance with the progress of the reaction. When the temperature of the ester exchange reaction is 100°C or more, a reaction rate increases. Meanwhile, when the temperature is 330°C or less, no side reaction occurs and a problem such as the coloring of the polycarbonate to be produced hardly occurs.

In addition, a reaction pressure is set depending on the vapor pressure of a monomer to be used and the reaction temperature. The pressure only needs to be set so that the reaction may be efficiently performed, and is not limited. In normal cases, the following is often adopted: at the initial stage of the reaction, the pressure is set to an atmospheric pressure (normal pressure) to pressurized state ranging from 1 atm to 50 atm (760 torr to 38,000 torr), and at the later stage of the reaction, the pressure is set to a decompressed state, preferably from 1.33 Pa to $1.33\times10^4$ Pa (0.01 torr to 100 torr) in the end.

The reaction only needs to be performed until a target molecular weight is obtained, and a reaction time is typically from about 0.2 hour to about 10 hours.

The ester exchange reaction, which is typically performed in the absence of an inert solvent, may be performed in the presence of 1 mass% to 150 mass% of the inert solvent with respect to the polycarbonate to be obtained as required. Examples of the inert solvent include: aromatic compounds, such as diphenyl ether, halogenated diphenyl ether, benzophenone, polyphenyl ether, dichlorobenzene, and methylnaphthalene; and cycloalkanes, such as tricyclo(5,2,10)decane, cyclooctane, and cyclodecane.

In addition, the reaction may be performed under an inert gas atmosphere as required, and examples of the inert gas include various gases, such as: gases such as argon, carbon dioxide, dinitrogen monoxide, and nitrogen; chlorofluorohydrocarbons; alkanes, such as ethane and propane; and alkenes, such as ethylene and propylene.

In the ester exchange method, a polymerization catalyst may be used for increasing the rate of the polymerization. Examples of the polymerization catalyst include an alkali metal compound, an alkaline earth metal compound, a nitrogen-containing compound, a metal compound, and a combination of a nitrogen-containing organic basic compound

and a quaternary phosphonium salt containing an aryl group.

Examples of the alkali metal compound include sodium hydroxide, potassium hydroxide, cesium hydroxide, lithium hydroxide, sodium hydrogen carbonate, sodium carbonate, potassium carbonate, cesium carbonate, lithium carbonate, sodium acetate, potassium acetate, cesium acetate, lithium acetate, sodium stearate, potassium stearate, cesium stearate, lithium stearate, sodium borohydride, sodium benzoate, potassium benzoate, cesium benzoate, lithium benzoate, disodium hydrogen phosphate, dipotassium hydrogen phosphate, dilithium hydrogen phosphate, disodium phenyl phosphate; disodium salt, dipotassium salt, dicesium salt, or dilithium salt of bisphenol A; and sodium salt, potassium salt, cesium salt, or lithium salt of phenol.

Example of the alkaline earth metal compound include magnesium hydroxide, calcium hydroxide, strontium hydroxide, barium hydroxide, magnesium carbonate, calcium carbonate, strontium carbonate, barium carbonate, magnesium diacetate, calcium diacetate, strontium diacetate, and barium diacetate.

Examples of the nitrogen-containing compound include: quaternary ammonium hydroxides having an alkyl group, an aryl group, or the like, such as tetramethylammonium hydroxide, tetraethylammonium hydroxide, tetrapropylammonium hydroxide, tetrabutylammonium hydroxide, and trimethylbenzylammonium hydroxide; tertiary amines, such as triethylamine, dimethylbenzylamine, and triphenylamine; imidazoles, such as 2-methylimidazole, 2-phenylimidazole, and benzimidazole; and bases or basic salts, such as ammonia, tetramethylammonium borohydride, tetrabutylammonium borohydride, tetrabutylammonium tetraphenylborate, and tetraphenylammonium tetraphenylborate.

Examples of the metal compound include a zinc-aluminum compound, a germanium compound, an organotin compound, an antimony compound, a manganese compound, a titanium compound, and a zirconium compound. Those compounds may be used alone or in combination thereof.

The combination of the nitrogen-containing organic basic compound and the quaternary phosphonium salt containing an aryl group is, for example, a combination of tetramethylammonium hydroxide and tetraphenylphosphonium tetraphenylborate.

The usage amount of such polymerization catalyst is selected from the range of preferably from $1\times10^{-9}$ equivalent to $1\times10^{-2}$ equivalent, more preferably from $1\times10^{-8}$ equivalent to $1\times10^{-2}$ equivalent, still more preferably from $1\times10^{-7}$ equivalent to $1\times10^{-3}$ equivalent with respect to 1 mol of the dihydroxy compound.

A catalyst deactivator may be added at the later stage of the reaction. As the catalyst deactivator to be used, a known catalyst deactivator may be effectively used, and among them, ammonium salts or phosphonium salts of sulfonic acid are preferred. Further, salts of dodecylbenzenesulfonic acid, such as tetrabutylphosphonium dodecylbenzenesulfonate, or salts of *p*-toluenesulfonic acid, such as tetrabutylammonium *p*-toluenesulfonate, are preferred.

As esters of sulfonic acid, methyl benzenesulfonate, ethyl benzenesulfonate, butyl benzenesulfonate, octyl benzenesulfonate, phenyl benzenesulfonate, methyl p-toluenesulfonate, ethyl *p*-toluenesulfonate, butyl *p*-toluenesulfonate, octyl *p*-toluenesulfonate, phenyl *p*-toluenesulfonate, and the like are also preferably used.

Among them, tetrabutylphosphonium dodecylbenzenesulfonate or butyl *p*-toluenesulfonate is most preferably used.

With regard to the usage amount of such catalyst deactivator, when at least one kind of polymerization catalyst selected from alkali metal compounds and/or alkaline earth metal compounds is used, the catalyst deactivator may be used preferably at a ratio of from 0.5 mol to 50 mol, more preferably at a ratio of from 0.5 mol to 10 mol, still more preferably at a ratio of from 0.8 mol to 5 mol per 1 mol of the catalyst.

The reaction in the ester exchange method may be performed by any one of a continuous system and a batch system. A reactor to be used in melt polymerization may be any one of: a vertical reactor equipped with, for example, an anchor-type stirring blade, a max blend stirring blade, or a helical ribbon-type stirring blade; and a horizontal reactor equipped with, for example, a paddle blade, a lattice blade, or a spectacle blade. Further, the reactor may be of an extruder type equipped with a screw. In the case of the continuous system, an appropriate combination of such reactors is preferably used.

(Interfacial Polycondensation Method)

When the aliphatic polycarbonate-based resin (A) is produced by a normal interfacial polycondensation method, the dihydroxy compound and the carbonate precursor, such as phosgene, are caused to react with each other in an inert organic solvent, such as methylene chloride, in the presence of a known acid acceptor or molecular weight modifier, and further, a catalyst or branching agent added as required.

As the catalyst in the interfacial polycondensation method, a phase-transfer catalyst, such as a tertiary amine or a salt thereof, a quaternary ammonium salt, or a quaternary phosphonium salt, may be preferably used. Examples of the tertiary amine include triethylamine, tributylamine, N,N-dimethylcyclohexylamine, pyridine, and dimethylaniline. Examples of the tertiary amine salt include hydrochlorides and bromates of those tertiary amines. Examples of the quaternary ammonium salt include trimethylbenzylammonium chloride, triethylbenzylammonium chloride, tributylbenzylammonium chloride, trioctylmethylammonium chloride, tetrabutylammonium chloride, and tetrabutylammonium bromide. Examples of the quaternary phosphonium salt include tetrabutylphosphonium chloride and tetrabutylphosphonium bromide. Those catalysts may be used alone or in combination thereof. Among the catalysts, tertiary amines are preferred, and triethylamine is particularly suitable.

Examples of the inert organic solvent include chlorinated hydrocarbons, such as: dichloromethane (methylene chloride); trichloromethane; carbon tetrachloride; 1,1-dichloroethane; 1,2-dichloroethane; 1,1,1-trichloroethane; 1,1,2-trichloroethane; 1,1, 1,2-tetrachloroethane; 1,1,2,2-tetrachloroethane; pentachloroethane; and chlorobenzene, toluene, and acetophenone. Those organic solvents may be used alone or in combination thereof. Among them, methylene chloride is particularly suitable.

<Glass Filler>

The composition of a glass filler (B) according to the present invention needs to contain 53 mass% or more and 70 mass% or less of silicon dioxide ($SiO_2$), 0 mass% or more and 25 mass% or less of aluminum oxide ($Al_2O_3$), 0 mass% or more and 10 mass% or less of calcium oxide (CaO), 0 mass% or more and 15 mass% or less of boron oxide ($B_2O_3$), 0 mass% or more and 5 mass% or less of magnesium oxide (MgO), 0 mass% or more and 5 mass% or less of sodium oxide ($Na_2O$), 0 mass% or more and 10 mass% or less of zinc oxide (ZnO), 0 mass% or more and 10 mass% or less of strontium oxide (SrO), 0 mass% or more and 10 mass% or less of barium oxide (BaO), 0 mass% or more and 10 mass% or less of titanium oxide ($TiO_2$), 0 mass% or more and 10 mass% or less of zirconium oxide ($ZrO_2$), 0 mass% or more and 5 mass% or less of lithium oxide ($Li_2O$), 0 mass% or more and 5 mass% or less of potassium oxide ($K_2O$), and 0 mass% or more and 5 mass% or less of cesium oxide ($Cs_2O$), and have a total content of the lithium oxide ($Li_2O$), the sodium oxide ($Na_2O$), the potassium oxide ($K_2O$), and the cesium oxide ($Cs_2O$) of 5 mass% or less.

The glass filler (B) is used for strengthening the mechanical characteristics of the aliphatic polycarbonate-based resin (A).

In the composition of the glass filler, the content of the silicon dioxide ($SiO_2$) is 53 mass% or more and 70 mass% or less. When the content of the silicon dioxide ($SiO_2$) is less than 53 mass%, it may become difficult to adjust the refractive index of the glass filler to a desired one. In addition, when the content exceeds 70 mass%, solubility in the production of a glass may reduce. From this viewpoint, the content of the silicon dioxide ($SiO_2$) is preferably 55 mass% or more, more preferably 56 mass% or more, and is preferably 65 mass% or less, more preferably 60 mass% or less.

The content of the aluminum oxide ($Al_2O_3$) is 0 mass% or more and 25 mass% or less. When the content of the aluminum oxide ($Al_2O_3$) exceeds 25 mass%, the solubility reduces and hence the glass filler to be obtained is liable to be nonuniform. From this viewpoint, the content of the aluminum oxide ($Al_2O_3$) is preferably 1 mass% or more, more preferably 3 mass% or more, and is preferably 24 mass% or less, more preferably 23 mass% or less.

The total content of the silicon dioxide ($SiO_2$) and the aluminum oxide ($Al_2O_3$) in the glass filler (B) is preferably 67.5 mass% or more and 77.5 mass% or less with respect to the entirety of the glass filler.

The boron oxide ($B_2O_3$) is an optional component and the glass filler contains the component at a content of 0 mass% or more and 15 mass% or less. The incorporation of the boron oxide ($B_2O_3$) can improve the solubility of the glass and can improve, for example, the water resistance of the glass. When the content of the boron oxide ($B_2O_3$) exceeds 15 mass%, the strength of the glass filler may reduce. From this viewpoint, the content of the boron oxide ($B_2O_3$) is preferably 0 mass% or more and 10 mass% or less, more preferably 0 mass% or more and 9 mass% or less.

The magnesium oxide (MgO) is an optional component and the glass filler contains the component at a content of 0 mass% or more and 5 mass% or less. The incorporation of the magnesium oxide (MgO) can improve the physical properties, such as tensile strength, of the glass filler and can improve its chemical durability. When the content of the magnesium oxide (MgO) exceeds 5 mass%, the solubility of the glass may reduce. From this viewpoint, the content of the magnesium oxide (MgO) is preferably 0 mass% or more and 3 mass% or less.

The calcium oxide (CaO) is an optional component and the glass filler contains the component at a content of 0 mass% or more and 10 mass% or less. When the content of the calcium oxide (CaO) exceeds 10 mass%, it may become difficult to adjust the refractive index to a desired one and the glass may be liable to crystallize. From these viewpoints, the content of the calcium oxide (CaO) is preferably 0 mass% or more and 5 mass% or less.

The zinc oxide (ZnO), the strontium oxide (SrO), and the barium oxide (BaO) are optional components, and the glass filler contains each of the components at a content of 0 mass% or more and 10 mass% or less.

The incorporation of the zinc oxide (ZnO), the strontium oxide (SrO), and/or the barium oxide (BaO) through substitution for the calcium oxide (CaO) can improve the solubility of the glass and can suppress the crystallization of the glass. However, when the content of each of the components exceeds 10 mass%, the liquidus temperature of the glass increases and hence the glass may be liable to crystallize. From this viewpoint, the content of each of the zinc oxide (ZnO), the barium oxide (BaO), and the strontium oxide (SrO) is preferably 0 mass% or more and 5 mass% or less.

The total content of the calcium oxide (CaO), the zinc oxide (ZnO), the barium oxide (BaO), and the strontium oxide (SrO) is preferably 0 mass% or more and 25 mass% or less. When the total content exceeds 25 mass%, it may become difficult to adjust the refractive index to a desired one. The total content of the calcium oxide (CaO), the zinc

oxide (ZnO), the barium oxide (BaO), and the strontium oxide (SrO) is more preferably 5 mass% or more and 25 mass% or less. When the total content is 5 mass% or more, the solubility of the glass improves.

The sodium oxide ($Na_2O$) is an optional component, and is incorporated at a content of 0 mass% or more and 5 mass% or less. When the content of the sodium oxide exceeds 5 mass%, the water resistance of the glass reduces, and hence an alkali is liable to be eluted. Such content is not preferred because the polycarbonate-based resin is hydrolyzed by the eluted alkali component to cause a reduction in molecular weight of the resin, and the reduction is responsible for reductions in physical properties of the molded body. From this viewpoint, the content of the sodium oxide ($Na_2O$) is preferably 0 mass% or more and 5 mass% or less.

The potassium oxide ($K_2O$), the lithium oxide ($Li_2O$), and the cesium oxide ($Cs_2O$) are optional components, and may each be incorporated at a content of 0 mass% or more and 5 mass% or less. The incorporation of the potassium oxide ($K_2O$), the lithium oxide ($Li_2O$), and the cesium oxide ($Cs_2O$) through substitution for at least part of the sodium oxide ($Na_2O$) can improve the solubility of the glass. Meanwhile, when the content of each of the components exceeds 5 mass%, the water resistance of the glass reduces, and hence an alkali is liable to be eluted. Such content is not preferred because the polycarbonate-based resin is hydrolyzed by the eluted alkali component to cause a reduction in molecular weight of the resin, and the reduction is responsible for reductions in physical properties of the molded body. In addition, the glass is liable to crystallize. From this viewpoint, the content of each of the potassium oxide ($K_2O$), the lithium oxide ($Li_2O$), and the cesium oxide ($Cs_2O$) is preferably 0 mass% or more and 3 mass% or less.

In the glass filler (B) according to the present invention, the total content of the lithium oxide ($Li_2O$), the sodium oxide ($Na_2O$), the potassium oxide ($K_2O$), and the cesium oxide ($Cs_2O$) needs to be 5 mass% or less. When the total content of the sodium oxide ($Na_2O$), the potassium oxide ($K_2O$), the lithium oxide ($Li_2O$), and the cesium oxide ($Cs_2O$) exceeds 5 mass%, the water resistance of the glass reduces, and hence an alkali is liable to be eluted. The polycarbonate-based resin is hydrolyzed by the eluted alkali component to cause a reduction in molecular weight of the resin, and the reduction is responsible for reductions in physical properties of the molded body. From the viewpoint of the ease with which the refractive index of the glass filler (B) is adjusted within a desired range, the total amount of the alkali components is preferably 0.1 mass% or more.

From those viewpoints, the total content of the lithium oxide ($Li_2O$), the sodium oxide ($Na_2O$), the potassium oxide ($K_2O$), and the cesium oxide ($Cs_2O$) is preferably 1 mass% or more, more preferably 2 mass% or more, still more preferably 3 mass% or more, and is preferably 5 mass% or less, more preferably 4.8 mass% or less, still more preferably 4.6 mass% or less.

The titanium oxide ($TiO_2$) is an optional component, and is incorporated at a content of 0 mass% or more and 10 mass% or less. The incorporation of the titanium oxide ($TiO_2$) can improve the solubility of the glass and can improve the water resistance of the glass. When the content of the titanium oxide ($TiO_2$) exceeds 10 mass%, the glass is liable to crystallize.

From this viewpoint, the content of the titanium oxide ($TiO_2$) is preferably 0 mass% or more and 8 mass% or less, more preferably 0 mass% or more and 7 mass% or less, still more preferably 0 mass% or more and 6 mass% or less. When the content of the titanium oxide ($TiO_2$) is 8 mass% or less, the coloring of the glass in the presence of iron oxide ($Fe_2O_3$) to be incorporated as an impurity can be suppressed.

In addition, in order that the coloring of the glass filler may be suppressed, the content of the iron oxide ($Fe_2O_3$) as an impurity in the raw materials is preferably 0 mass% or more and 0.1 mass% or less with respect to the entirety of the glass.

In order that the coloring of the glass filler may be suppressed, it is also preferred that diantimony trioxide ($Sb_2O_3$) be incorporated at a content of 0 mass% or more and 2 mass% or less with respect to the entirety of the glass. Further, in order that the solubility of the glass filler may be improved, fluorine ($F_2$) is preferably incorporated at a content of 0 mass% or more and 1 mass% or less with respect to the entirety of the glass.

The glass filler (B) according to the present invention may further contain any one of the following components as long as the adjustment of the refractive index, the physical properties of the glass, the moldability of the glass, and the like are not adversely affected.

For example, an oxide containing the following element may be incorporated as a component for adjusting the refractive index of the grass filler: zirconium (Zr), lanthanum (La), yttrium (Y), gadolinium (Gd), bismuth (Bi), antimony (Sb), tantalum (Ta), niobium (Nb), tungsten (W), or the like. In addition, an oxide containing the following element may be incorporated as a component for adjusting or removing the color of the glass: cobalt (Co), copper (Cu), neodymium (Nd), antimony (Sb), or the like. Zirconium oxide ($ZrO_2$) is an optional component and the glass filler preferably contains the component at a content of 0 mass% or more and 10 mass% or less. When the content of the zirconium oxide ($ZrO_2$) exceeds 10 mass%, the solubility in the production of the glass may reduce.

The specific gravity of the glass filler (B) is preferably set to 2.75 or less from the viewpoint of a weight reduction.

Various forms, such as at least one kind selected from the group consisting of glass fibers, glass powder, a glass flake, milled fibers, a glass cloth, and glass beads, may be adopted as the glass filler (B). Among them, glass fibers are preferred in terms of a reinforcing effect.

The glass fibers may be obtained by employing a conventionally known spinning method for glass long fibers. For example, glass can be turned into fibers by employing any one of the various methods such as: a direct melt (DM) method involving continuously turning glass raw materials into glass in a melting furnace, introducing the resultant glass into a forehearth, and attaching a bushing to the bottom of the forehearth to spin the glass; and a remelting method involving processing molten glass into a marble-, cullet-, or rod-like shape, remelting the resultant, and spinning the resultant.

Although the average fiber diameter of the glass fibers is not particularly limited, fibers having an average fiber diameter of 3 μm or more and 25 μm or less are preferably used. When the average fiber diameter is less than 3 μm, the area of contact between the glass fibers and the polycarbonate-based resin increases to be responsible for irregular reflection, and hence the transparency of the molded body reduces in some cases. When the average fiber diameter is more than 25 μm, the strength of each of the glass fibers weakens, and as a result, the strength of the molded body reduces in some cases.

Preferably used are such glass fibers that a ratio (aspect ratio) between their average fiber length and average fiber diameter is 2 or more and 150 or less. When the aspect ratio is 2 or more, an improving effect on the mechanical strength of the molded body is obtained. When the aspect ratio is 150 or less, the molded body obtains high transparency and hence the external appearance of the molded body improves.

From the foregoing viewpoints, the average fiber diameter of the glass fibers is preferably 3 μm or more, more preferably 5 μm or more, still more preferably 7 μm or more, and is preferably 25 μm or less, more preferably 15 μm or less. In addition, the aspect ratio of the glass fibers is preferably 2 or more, more preferably 2.5 or more, still more preferably 3 or more, and is preferably 150 or less, more preferably 120 or less, still more preferably 100 or less.

The glass powder is obtained by a conventionally known production method. Powder having a desired particle diameter may be obtained by, for example, melting the glass raw materials in a melting furnace and charging the resultant melt into water, followed by water granulation, or molding the melt into a sheet shape with a cooling roll, followed by the pulverization of the sheet. The particle diameter of the glass powder is not particularly limited, but is preferably 1 μm or more and 100 μm or less.

The glass flake is obtained by a conventionally known production method. A flake having a desired aspect ratio may be obtained by, for example, melting the glass raw materials in a melting furnace, drawing the resultant melt in a tubular shape to make the thickness of the glass constant, then pulverizing the glass with a roll to provide a frit having a specific thickness, and pulverizing the frit. The thickness and aspect ratio of the glass flake are not particularly limited, but it is preferred that the thickness be 0.1 μm or more and 10 μm or less, and the aspect ratio be 5 or more and 150 or less.

The milled fibers may be obtained by employing a conventionally known milled fiber production method. The milled fibers may be obtained by, for example, pulverizing a strand of glass fibers with a hammer mill or a ball mill. The average fiber diameter and aspect ratio of the milled fibers are not particularly limited, but milled fibers having an average fiber diameter of 3 μm or more and 25 μm or less and an aspect ratio of 2 or more and 150 or less are preferably used. The average fiber diameter of the milled fibers is more preferably 5 μm or more and 20 μm or less, still more preferably 7 μm or more and 15 μm or less. In addition, the aspect ratio of the milled fibers is more preferably 2.5 or more and 90 or less, still more preferably 3 or more and 70 or less.

The glass cloth may be obtained by a conventionally known production method. For example, a sizing agent is applied to glass fibers to provide a strand having a desired number of filaments. The strand having applied thereto the sizing agent is further twisted to be used as the warp and/or woof of the glass cloth. When the strand is used as the warp, the number, lengths, density, and the like of the filaments are preferably adjusted in accordance with textile design. The glass cloth may be produced by a weaving step after the warped warp and a bobbin serving as the woof have been mounted on a loom.

The glass beads are obtained by a conventionally known production method. Glass beads having desired particle diameters may be obtained by, for example, melting the glass raw materials in a melting furnace and spraying the resultant melt with a burner. The particle diameter of each of the glass beads is not particularly limited, but is preferably 5 μm or more and 300 μm or less.

In order that a reduction in transparency of the molded body due to void formation may be suppressed by improving an affinity between the aliphatic polycarbonate-based resin (A) and the glass filler (B) to improve adhesiveness therebetween, the glass filler (B) is preferably subjected to a surface treatment with a treatment agent containing a coupling agent.

A silane-based coupling agent, a borane-based coupling agent, an aluminate-based coupling agent, a titanate-based coupling agent, or the like may be used as the coupling agent. The silane-based coupling agent is particularly preferably used from the viewpoint of improving adhesiveness between the polycarbonate-based resin and the glass filler. For example, an aminosilane-based coupling agent, an epoxysilane-based coupling agent, or an acrylic silane-based coupling agent may be used as the silane-based coupling agent. Among them, an aminosilane-based coupling agent is most preferred.

For example, a film former, a lubricant, and an antistatic agent may be given as a component to be incorporated

into the treatment agent other than the coupling agent. Those components may be used alone or in combination thereof. The following may be used as the film former: a polymer, such as a vinyl acetate resin, a urethane resin, an acrylic resin, a polyester resin, a polyether resin, a phenoxy resin, a polyamide resin, an epoxy resin, or a polyolefin resin, or a modified product thereof.

An aliphatic ester-based, aliphatic ether-based, aromatic ester-based, or aromatic ether-based surfactant may be used as the lubricant.

The following may be used as the antistatic agent: an inorganic salt, such as lithium chloride or potassium iodide, or a quaternary ammonium salt, such as ammonium chloride or ammonium ethosulfate.

The refractive index of the glass filler (B) at a wavelength of 589.3 nm needs to be 1.485 or more and 1.520 or less. When the refractive index at a wavelength of 589.3 nm deviates from the range, the difference in refractive index between the aliphatic polycarbonate-based resin (A) having a specific structure according to the present invention and the filler described above cannot be set within a specific range, with the result that the transparency of the molded body to be obtained is still poor. Further, from the viewpoint of improving the transparency of the molded body formed of the polycarbonate-based resin composition, the refractive index of the glass filler (B) at a wavelength of 589.3 nm is preferably 1.490 or more, more preferably 1.500 or more, and is preferably 1.515 or less, more preferably 1.514 or less.

From the viewpoint of reducing the chromatic aberration of the molded body to be obtained, the Abbe number ($V_d$) of the glass filler (B) is preferably 52.5 or more and 62.5 or less. The Abbe number ($V_d$) of the glass filler is more preferably 53.0 or more and 60.0 or less, still more preferably 53.0 or more and 55.0 or less.

<Polycarbonate-based Resin Composition>

The polycarbonate-based resin composition of the present invention includes the aliphatic polycarbonate-based resin (A) and the glass filler (B).

(Contents of Polycarbonate-based Resin and Glass Filler)

The content of the glass filler (B) in the polycarbonate-based resin composition of the present invention is preferably 2 mass% or more and 50 mass% or less with respect to 100 mass% of the total of the aliphatic polycarbonate-based resin (A) and the glass filler (B). When the content of the glass filler (B) is less than 2 mass%, an improving effect on the mechanical properties of the resin tends not to be sufficiently obtained. In addition, when the content of the glass filler (B) exceeds 50 mass%, there is a risk in that a contact interface between the resin and the glass increases, the high transparency of the molded body reduces, and the flowability of the composition at the time of its molding reduces.

In the polycarbonate-based resin composition, the content of the glass filler (B) in 100 mass% of the total of the aliphatic polycarbonate-based resin (A) and the glass filler (B) is more preferably 10 mass% or more, still more preferably 15 mass% or more, and is more preferably 40 mass% or less, still more preferably 35 mass% or less, particularly preferably 30 mass% or less.

Setting the amount of the glass filler (B) in the polycarbonate-based resin composition within the range provides a molded body that brings together extremely high transparency and good mechanical properties.

The polycarbonate-based resin composition of the present invention can realize an improvement in strength, such as an elastic modulus, by the blending of the glass filler and a low linear expansion coefficient while maintaining the excellent transparency intrinsic to the polycarbonate-based resin.

(Difference in Refractive Index between Glass Filler and Polycarbonate-based Resin)

In the polycarbonate-based resin composition of the present invention, the difference in refractive index between the aliphatic polycarbonate-based resin (A) and the glass filler (B) needs to be 0.003 or less for light having a wavelength of 486.1 nm, be 0.001 or less for light having a wavelength of 589.3 nm, and be 0.001 or less for light having a wavelength of 656.3 nm. When the difference in refractive index between the aliphatic polycarbonate-based resin (A) and the glass filler (B) is more than 0.003 for light having a wavelength of 486.1 nm, it becomes difficult to obtain a molded body having extremely excellent transparency. When the difference in refractive index between the aliphatic polycarbonate-based resin (A) and the glass filler (B) is more than 0.001 for each of light having a wavelength of 589.3 nm and light having a wavelength of 656.3 nm, the transparency of the molded body becomes insufficient. When the differences in refractive index between the aliphatic polycarbonate-based resin (A) and the glass filler (B) are set within the ranges, a molded body having extremely excellent transparency can be obtained.

Specifically, the difference in refractive index between the aliphatic polycarbonate-based resin (A) and the glass filler (B) needs to be 0.003 or less for light having a wavelength of 486.1 nm, and is preferably 0.001 or less, more preferably 0.0008 or less, still more preferably 0.0007 or less.

The difference in refractive index between the aliphatic polycarbonate-based resin (A) and the glass filler (B)

needs to be 0.001 or less for light having a wavelength of 589.3 nm, and is preferably 0.0008 or less, more preferably 0.0005 or less, still more preferably 0.0003 or less.

The difference in refractive index between the aliphatic polycarbonate-based resin (A) and the glass filler (B) needs to be 0.001 or less for light having a wavelength of 656.3 nm, and is preferably 0.0008 or less, more preferably 0.0007 or less, still more preferably 0.0006 or less.

In the present invention, in addition to the differences in refractive index at the three wavelengths, at least one of the following requirement (1) or (2) is preferably satisfied:

(1) a difference in refractive index between the aliphatic polycarbonate-based resin (A) and the glass filler (B) for light having a wavelength of 407 nm is 0.005 or less; and
(2) a difference in refractive index between the aliphatic polycarbonate-based resin (A) and the glass filler (B) for light having a wavelength of 785 nm is 0.003 or less.

When at least one of the requirement (1) or (2) is further satisfied, the refractive indices of the aliphatic polycarbonate-based resin (A) and the glass filler (B) can be further brought close to each other, and hence the extremely excellent transparency of the molded body can be further improved. When both of the requirements (1) and (2) are satisfied, the transparency can be further improved.

In the requirement (1), the difference in refractive index between the aliphatic polycarbonate-based resin (A) and the glass filler (B) at a wavelength of 407 nm is more preferably 0.004 or less, still more preferably 0.003 or less.

In the requirement (2), the difference in refractive index between the aliphatic polycarbonate-based resin (A) and the glass filler (B) at a wavelength of 785 nm is more preferably 0.002 or less, still more preferably 0.0015 or less.

In order to match the refractive indices of the aliphatic polycarbonate-based resin (A) and the glass filler (B) at each wavelength with each other, the resin and the filler each preferably have small chromatic aberration, that is, a high Abbe value. The Abbe number (Vd) of the glass filler is as described above. From the viewpoint of reducing the chromatic aberration, the Abbe number (Vd) of the aliphatic polycarbonate-based resin (A) is preferably 50 or more, more preferably 51 or more, still more preferably 55 or more.

(Additive)

A well-known additive may be added to the polycarbonate-based resin composition of the present invention as long as its characteristics, such as a refractive index, are not impaired. For example, the blending of an antioxidant as the additive can suppress the decomposition of the resin at the time of the production or molding of the polycarbonate-based resin composition.

Depending on the intended use or as required, additives such as thermal stabilizers, plasticizers, light stabilizers, polymerization metal deactivators, flame retardants, lubricants, antistatic agents, surfactants, antimicrobial agents, UV absorbing agents, and mold releasing agents may be blended in the polycarbonate-based resin composition.

The polycarbonate-based resin composition of the present invention may be produced by employing a known method. For example, the following method is preferred: the aliphatic polycarbonate-based resin (A), the glass filler (B), and an optional additive are mixed with a mixer or the like, and the mixture is melted and kneaded with an extruder to be pelletized.

<Molded Body of Polycarbonate-based Resin Composition>

The molded body formed of the polycarbonate-based resin composition of the present invention may be produced by using a known molding method. For example, the molded body may be obtained by molding the polycarbonate-based resin composition according to injection molding, extrusion molding, compression molding, calender molding, or the like. The molding may be performed with a die whose inside has been covered with a resin film or a resin sheet.

The thickness of the molded body may be arbitrarily set in accordance with its applications, and is not limited. In particular, when the transparency of the molded body is required, the thickness is preferably 0.2 mm or more, more preferably 0.3 mm or more, and is preferably 4.0 mm or less, more preferably 3.0 mm or less, still more preferably 2.0 mm or less. When the thickness of the molded body is 0.2 mm or more, its warping does not occur and good mechanical strength is obtained. In addition, when the thickness of the molded body is 4.0 mm or less, high transparency is obtained.

A coating film formed of a hard coating film, an antifogging film, an antistatic film, or an antireflection film may be formed on the molded body as required, and a composite coating film formed of two or more kinds thereof may be formed. Among them, a coating film formed of a hard coating film is particularly preferably formed because the film has good weatherability and can prevent the wear of the surface of the molded body with time.

A material for the hard coating film is not particularly limited, and a known material, such as an acrylate-based hard coating agent, a silicone-based hard coating agent, or an inorganic hard coating agent, may be used.

Conditions for the production of the polycarbonate-based resin composition and conditions for the molding of the polycarbonate-based resin molded body may be appropriately selected, and are not particularly limited. For example, in normal cases, it is preferred that a heating temperature at the time of the melting and kneading, and the temperature of the resin at the time of its injection molding be each appropriately selected from the range of from 150°C or more to 300°C or less from the viewpoint of suppressing the decomposition of the resin.

When at least part of the glass filler is present on the outermost surface of the molded body, the surface roughness of the molded body increases and the degree of irregular reflection at the surface of the molded body increases, and as a result, the transparency of the molded body deteriorates in some cases. For example, a method involving forming a layer containing a high proportion of the resin (skin layer) on the outermost surface of the molded body to reduce the surface roughness of the molded body is available as a method of reducing the surface roughness of the molded body. In the case of injection molding, a method of forming the skin layer may be, for example, a method involving setting the temperature of a die to a temperature higher than a general condition to allow the resin in contact with the die to easily flow, thereby forming the skin layer on the outermost surface of the molded body. In the case of press molding, when a pressure at the time of the molding is set to a pressure higher than a general condition, the skin layer may be formed on the outermost surface of the molded body to reduce the surface roughness of the molded body. When the surface roughness of the molded body is reduced, the irregular reflection at the surface of the molded body is suppressed and a haze reduces, and as a result, the transparency of the molded body can be further improved.

When the molded body of the polycarbonate-based resin composition thus obtained is molded into a flat plate, the flat plate preferably has a total light transmittance for visible light of 80% or more and a haze of 10% or less.

The total light transmittance is more preferably 85% or more, still more preferably 89% or more. The haze is more preferably 8% or less, still more preferably 6% or less.

The molded body having the above-mentioned optical properties is suitable for an application where high transparency is required because the molded body is extremely excellent in transparency. The total light transmittance for visible light may be measured in conformity with JIS K 7361-1:1997, and the haze may be measured in conformity with JIS K7136:2000.

The molded body of the present invention uses the aliphatic polycarbonate-based resin (A) containing the aliphatic carbonate repeating unit. Accordingly, a polycarbonate-based resin molded body excellent in scratch resistance, weatherability, and parallel ray transmittance as compared with a polycarbonate-based resin formed only of the aromatic carbonate repeating unit can be obtained.

The molded body of the polycarbonate-based resin composition of the present invention can be suitably used in members that are each required to have transparency and rigidity, and further, scratch resistance and weatherability, such as: (1) automobile parts, such as a sunroof, a door visor, a rear window, and a side window; (2) building parts, such as a building glass, a soundproof wall, a car port, a sunroom, and gratings; (3) windows for railway vehicles and ships; (4) parts for electrical instruments, such as various parts for a television, a radio-cassette recorder, a video camera, a video tape recorder, an audio player, a DVD player, a telephone, a display, a computer, a register, a copying machine, a printer, a facsimile, and the like, and respective parts for outer plates and housings thereof; (5) parts for precision instruments, such as casings and covers for precision machines, such as a cellular phone, a PDA, a camera, a slide projector, a watch, an electronic calculator, a measuring instrument, and a display instrument; (6) agricultural parts, such as a vinyl house and a greenhouse; and (7) furniture parts, such as a lighting cover, blinds, and interior tools.

## Examples

Hereinafter the present invention is described in more detail by way of Examples and Comparative Examples, but the present invention is by no means limited thereto.

Characteristic values in the respective examples were determined in accordance with the following procedures.

<Composition Ratio of Polycarbonate Resin>

The copolymerization amounts of the aliphatic carbonate repeating unit (A-1) and the aromatic carbonate repeating unit ($A^{AR}$-1) were calculated by measuring the $^1$H-NMR spectrum of the aliphatic polycarbonate-based resin (A) with a nuclear magnetic resonance (NMR)-measuring apparatus (manufactured by JEOL Ltd.; JNM-AL500).

<Viscosity-average Molecular Weight of Polycarbonate Resin>

A viscosity-average molecular weight (Mv) was calculated from the following equation (Schnell's equation) by using a limiting viscosity [η] determined through the measurement of the viscosity of a methylene chloride solution (concentration: g/L) at 20°C with an Ubbelohde-type viscometer.

$$[\eta] = 1.23 \times 10^{-5} \times Mv^{0.83}$$

<Refractive Index and Abbe Number of Polycarbonate Resin>

Refractive index measurement was performed as described below. The refractive indices of the aliphatic polycarbonate-based resin (A) at wavelengths of 785 nm, 594 nm, and 407 nm (H line) were measured by using MODEL 2010/M PRISM COUPLER manufactured by METRICON as a refractive index-measuring apparatus. The refractive indices thereof at wavelengths of 486.1 nm (nF), 589.3 nm (nD), and 656.3 nm (nC) were calculated from a regression curve based on Cauchy's dispersion formula on the basis of the measured values.

A measurement sample was obtained as follows: a plate having a thickness of 1 mm was produced by subjecting the resin to press molding at from 130°C to 220°C, and was defined as a measurement test piece.

<Glass Transition Temperature Tg of Polycarbonate Resin>

The glass transition temperature of the polycarbonate resin was measured with a thermal analysis system DSC-2910 manufactured by TA Instruments in conformity with JIS K 7121:1987 under a nitrogen atmosphere (nitrogen flow rate: 40 mL/min) and under the condition of a rate of temperature increase of 20°C/min.

<Refractive Index, Abbe Number, and Specific Gravity of Glass Filler>

The refractive index of the glass filler is a value obtained from measurement performed on a test piece in conformity with an immersion method based on the method B of JIS K7142:2014. Its Abbe number was calculated from the resultant refractive index. Its specific gravity was measured by Archimedes' method.

<Evaluation of Polycarbonate-based Resin Composition for Performance>

(1) Total Light Transmittance and Haze Value

A total light transmittance as an optical property of a polycarbonate resin composition molded body is a value obtained from measurement performed on a sample having a thickness of 2 mm with NDH SENSOR manufactured by NIPPON DENSHOKU INDUSTRIES, CO., LTD. in conformity with ASTM D1003. A haze value is a value obtained from measurement performed on the sample having a thickness of 2 mm with NDH SENSOR manufactured by NIPPON DENSHOKU INDUSTRIES, CO., LTD. in conformity with ASTM D1003.

(2) Deflection Temperature under Load (DTUL)

The deflection temperature under load of a test piece was measured in conformity with ASTM D648: Method B (load: 0.455 MPa).

(3) Moist Heat Resistance Test

A test piece was left to stand under an environment at a temperature of 65°C and a humidity of 95% for 750 hours. The bending strengths of the test piece before and after the standing were measured by a bending test (method in conformity with ASTM D790), and a change between the strengths before and after the standing was measured.

[Production of Aliphatic Polycarbonate-based Resin]

Production Example 1

<Production of PC1>

30.67 Grams (0.21 mol) of isosorbide (ISB) and 142.80 g (0.99 mol) of 1,4-cyclohexanedimethanol (CHDM) serving as monomer raw materials, 269.64 g (1.26 mol) of diphenyl carbonate serving as a carbonic acid diester, 1.44 mL of a 15 wt% aqueous solution of tetramethylammonium hydroxide, and 24 μL of a 0.1 mol/L aqueous solution of sodium hydroxide were loaded into a reaction vessel including a stirring apparatus, a distiller, and a decompression apparatus. Air in the system was purged with nitrogen, and then the contents were melted at 140°C. After the mixture had been stirred for 30 minutes, while a temperature in the vessel was increased to 180°C, a pressure therein was

gradually reduced, and the mixture was subjected to a reaction at 13.3 kPa for 30 minutes, followed by the removal of produced phenol by distillation. Subsequently, while the pressure was maintained at the above-mentioned value, the temperature was continuously increased, and the resultant was subjected to a reaction at 190°C for 30 minutes, at 200°C for 30 minutes, at 210°C for 30 minutes, and at 220°C for 60 minutes, followed by the removal of phenol by distillation. The pressure was gradually reduced and set to 133 Pa or less at 220°C. After the state had been held for 30 minutes, a degree of vacuum in the vessel was further increased. After the degree of vacuum had reached 1 mmHg or less, the resultant was subjected to a reaction for 4 hours under stirring. After that, 16 μL of a toluene solution containing 10 vol% of butyl p-toluenesulfonate was added as a deactivator to the resultant, and then the mixture was stirred at 240°C and 13.3 kPa for 20 minutes to provide a target copolymerized polycarbonate (PC1). The physical properties and characteristics of the PC1 are shown in Table 1.

Production Example 2

<Production of PC2> (Reference)

Polymerization was performed under the same conditions as those of Production Example 1 except that 87.70 g (0.6 mol) of isosorbide (ISB), 83.00 g (0.576 mol) of 1,4-cyclohexanedimethanol (CHDM), and 5.47 g (0.024 mol) of bisphenol A (BPA) were used as monomer raw materials. The physical properties and characteristics of a PC2 obtained by the polymerization are shown in Table 1.

Production Example 3

<Production of PC3>

Polymerization was performed under the same conditions as those of Production Example 1 except that 105.20 g (0.72 mol) of isosorbide (ISB), 47.11 g (0.24 mol) of tricyclodecanedimethanol (TCDDM), and 34.60 g (0.24 mol) of 1,4-cyclohexanedimethanol (CHDM) were used as monomer raw materials. The physical properties and characteristics of a PC3 obtained by the polymerization are shown in Table 1.

Production Example 4

<Production of PC4>

Polymerization was performed under the same conditions as those of Production Example 1 except that 114.00 g (0.78 mol) of isosorbide (ISB), 58.90 g (0.3 mol) of tricyclodecanedimethanol (TCDDM), and 17.30 g (0.12 mol) of 1,4-cyclohexanedimethanol (CHDM) were used as monomer raw materials. The physical properties and characteristics of a PC4 obtained by the polymerization are shown in Table 1.

Production Example 5

<Production of PC5> (Reference)

Polymerization was performed under the same conditions as those of Production Example 1 except that 114.00 g (0.78 mol) of isosorbide (ISB), 35.30 g (0.18 mol) of tricyclodecanedimethanol (TCDDM), 27.69 g (0.192 mol) of 1,4-cyclohexanedimethanol (CHDM), and 10.94 g (0.048 mol) of bisphenol A (BPA) were used as monomer raw materials. The physical properties and characteristics of a PC5 obtained by the polymerization are shown in Table 1.

Table 1

| | | | Production Example | | | | |
|---|---|---|---|---|---|---|---|
| | | | 1 | 2* | 3 | 4 | 5* |
| | | | PC1 | PC2 | PC3 | PC4 | PC5 |
| Repeating unit (A-1) | Aliphatic dihydroxy compound*1 (molar ratio) | ISB | 0.175 | 0.500 | 0.600 | 0.650 | 0.650 |
| | | TCDDM | - | - | 0.200 | 0.250 | 0.150 |
| | | CHDM | 0.825 | 0.480 | 0.200 | 0.100 | 0.160 |

(continued)

| | | | Production Example | | | | |
|---|---|---|---|---|---|---|---|
| | | | 1 | 2* | 3 | 4 | 5* |
| | | | PC1 | PC2 | PC3 | PC4 | PC5 |
| Repeating unit ($A^{AR}$-1) | Aromatic dihydroxy compound*1 (molar ratio) | BPA | - | 0.020 | - | - | 0.040 |
| Characteristic | Refractive index (nF) | | 1.4961 | 1.5077 | 1.5167 | 1.5203 | 1.5208 |
| | Refractive index (nD) | | 1.4902 | 1.5015 | 1.5104 | 1.5138 | 1.5139 |
| | Refractive index (nC) | | 1.4887 | 1.4990 | 1.5078 | 1.5111 | 1.5108 |
| | Abbe number | | 66.2 | 57.6 | 57.3 | 55.9 | 51.4 |
| | Glass transition temperature (°C) | | 74.3 | 103.8 | 113.3 | 118.3 | 120.3 |
| Refractive index detail | 407 nm (nH) | | 1.5090 | 1.5166 | 1.5258 | 1.5292 | 1.5291 |
| | 486.1 nm (nF) | | 1.4961 | 1.5078 | 1.5167 | 1.5204 | 1.5208 |
| | 589.3 nm (nD) | | 1.4902 | 1.5015 | 1.5104 | 1.5138 | 1.5139 |
| | 656.3 nm (nC) | | 1.4887 | 1.4990 | 1.5078 | 1.5112 | 1.5108 |
| | 785 nm | | 1.4869 | 1.4960 | 1.5047 | 1.5079 | 1.5068 |
| *1 CHDM: 1,4-cyclohexanedimethanol<br>TCDDM: tricyclodecanedimethanol<br>ISB: isosorbide<br>BPA: bisphenol A<br>* Reference | | | | | | | |

Production Examples 6 to 9

[Production of Glass Fibers]

Glass fibers GF1 to GF4 were produced according to compositions (mass%) shown in Table 2.

The glass fibers were produced as follows: the glass fibers were each spun by a conventionally known method so as to have a fiber diameter of 15 μm, and aminosilane and urethane whose total amount had been adjusted to 0.5 mass% with respect to the glass fibers were caused to adhere as binders to the glass fibers.

The results of the measurement of the refractive indices (nF) for light having a wavelength of 486.1 nm, refractive indices (nD) for light having a wavelength of 589.3 nm, refractive indices (nC) for light having a wavelength of 656.3 nm, refractive index details at respective wavelengths, and Abbe numbers of the obtained glass fibers GF1 to GF4 are shown in Table 2.

Table 2

| | Production Example | | | |
|---|---|---|---|---|
| | 6 | 7 | 8 | 9 |
| Glass filler | GF1 | GF2 | GF3 | GF4 |

(continued)

| | | Production Example | | | |
|---|---|---|---|---|---|
| | | 6 | 7 | 8 | 9 |
| Composition | $SiO_2$ | 70.0 | 59.3 | 57.1 | 71.0 |
| | $Al_2O_3$ | 4.5 | 19.4 | 22.4 | 4.0 |
| | $B_2O_3$ | 13.0 | 8.8 | 8.0 | 4.0 |
| | MgO | 3.0 | 2.2 | 2.0 | 3.0 |
| | CaO | 4.5 | 0.8 | 0.0 | 7.1 |
| | ZnO | 0.0 | 0.0 | 0.0 | 0.0 |
| | BaO | 0.0 | 0.0 | 0.0 | 0.0 |
| | SrO | 0.0 | 0.0 | 0.0 | 0.0 |
| | $Na_2O$ | 5.0 | 4.6 | 4.5 | 10.9 |
| | $K_2O$ | 0.0 | 0.0 | 0.0 | 0.0 |
| | $Li_2O$ | 0.0 | 0.0 | 0.0 | 0.0 |
| | $Cs_2O$ | 0.0 | 0.0 | 0.0 | 0.0 |
| | $TiO_2$ | 0.0 | 4.8 | 5.8 | 0.0 |
| | $ZrO_2$ | 0.0 | 0.0 | 0.0 | 0.0 |
| | $Na_2O+K_2O+Li_2O+Cs_2O$ | 5.0 | 4.6 | 4.5 | 10.9 |
| Characteristic | Refractive index (nF) | 1.4964 | 1.5169 | 1.5210 | 1.5150 |
| | Refractive index (nD) | 1.4901 | 1.5100 | 1.5140 | 1.5090 |
| | Refractive index (nC) | 1.4880 | 1.5075 | 1.5114 | 1.5070 |
| | Abbe number | 58.3 | 54.3 | 53.5 | 63.6 |
| Refractive index detail | 407 nm | 1.5075 | 1.5278 | 1.5319 | 1.5256 |
| | 486.1 nm | 1.4964 | 1.5169 | 1.5210 | 1.5150 |
| | 589.3 nm | 1.4901 | 1.5100 | 1.5140 | 1.5090 |
| | 656.3 nm | 1.4880 | 1.5075 | 1.5114 | 1.5070 |
| | 785 nm | 1.4858 | 1.5046 | 1.5084 | 1.5049 |

Examples 1 to 4, and Comparative Examples 1 and 2

[Production of Glass Fiber-reinforced Polycarbonate Resin Composition Molded Body]

Polycarbonate resin composition molded bodies of Examples 1 to 4, and Comparative Examples 1 and 2 were produced by performing compounding through the use of the polycarbonate resins (PC) obtained in Production Examples 1 to 5, and the glass fillers (glass fibers) obtained in Production Examples 6 to 9 according to compositions (mass%) shown in Table 3 and under the following conditions.

The polycarbonate resins and the glass fibers were blended at ratios shown in Table 3. The mixture was supplied to an extruder (model name: Micro Twin Screw compounder (manufactured by DSM)), and was melted and kneaded at an extrusion temperature of from 170°C to 250°C. The resultant was subjected to injection molding with an injection molding machine (model name: Injection Molding Machine (manufactured by Explore)) under the conditions of a cylinder temperature of from 170°C to 250°C and a die temperature of from 30°C to 120°C to provide a dumbbell piece. The resultant dumbbell piece was subjected to press molding at from 150°C to 220°C to produce a plate having a thickness of 2 mm. The plate was defined as a measurement test piece.

Table 3

| | | | Example | | | | Comparative Example | |
|---|---|---|---|---|---|---|---|---|
| | | | 1 | 2* | 3 | 4 | 1 | 2 |
| PC resin composition | PC | Kind | PC4 | PC5 | PC3 | PC1 | PC3 | PC2 |
| | | mass% | 80 | 80 | 80 | 80 | 80 | 80 |
| | Glass filler | Kind | GF3 | GF3 | GF2 | GF1 | GF4 | GF2 |
| | | mass% | 20 | 20 | 20 | 20 | 20 | 20 |
| Difference in refractive index between PC and glass filler | | nH (407 nm) | 0.0027 | 0.0028 | 0.0020 | -0.0015 | -0.0002 | 0.0112 |
| | | nF (486.1 nm) | 0.0007 | 0.0002 | 0.0002 | 0.0003 | -0.0017 | 0.0091 |
| | | nD (589.3 nm) | 0.0002 | 0.0002 | -0.0003 | -0.0001 | -0.0013 | 0.0085 |
| | | nC (656.3 nm) | 0.0002 | 0.0006 | -0.0003 | -0.0007 | -0.0008 | 0.0085 |
| | | 785 nm | 0.0005 | 0.0015 | -0.0001 | -0.0011 | 0.0002 | 0.0087 |
| Evaluation | Optical characteristic | Total light transmittance [%] | 89 | 89 | 90 | 90 | 88 | 78 |
| | | Haze [%] | 5.1 | 4.8 | 4.7 | 4.5 | 5.3 | 41 |
| | Mechanical characteristic | DTUL [°C] | 115 | 118 | 112 | 70 | 111 | 101 |
| | | Bending strength [MPa] | 145 | 147 | 150 | 142 | 143 | 151 |
| | | Bending strength [MPa] After moist heat resistance test | 132 | 131 | 133 | 130 | 89 | 136 |
| | | Bending strength maintenance ratio [%] | 91 | 89 | 89 | 92 | 62 | 90 |
| * Reference | | | | | | | | |

The results of Table 3 show that the molded bodies of Examples 1 to 4 are each excellent in transparency because their total light transmittances are higher than those of the molded bodies of Comparative Examples 1 and 2, and their haze values are lower than those of the molded bodies of Comparative Examples 1 and 2. In addition, the mechanical strength can be satisfactorily kept even after the moist heat resistance test.

Industrial Applicability

Each of the polycarbonate-based resin composition of the present invention and the molded body thereof has high transparency and has an excellent mechanical strength. Accordingly, the composition and the molded body may each be suitably used as a glass alternative material including a window of an automobile, a building, or the like, the material being required to have a mechanical strength, transparency, and the like.

## Claims

**1.** A polycarbonate-based resin composition, comprising:

an aliphatic polycarbonate-based resin (A) containing a repeating unit (A-1) represented by the general formula (1); and
a glass filler (B) containing 53 mass% or more and 70 mass% or less of silicon dioxide ($SiO_2$), 0 mass% or

more and 25 mass% or less of aluminum oxide ($Al_2O_3$), 0 mass% or more and 10 mass% or less of calcium oxide (CaO), 0 mass% or more and 15 mass% or less of boron oxide ($B_2O_3$), 0 mass% or more and 5 mass% or less of magnesium oxide (MgO), 0 mass% or more and 5 mass% or less of sodium oxide ($Na_2O$), 0 mass% or more and 10 mass% or less of zinc oxide (ZnO), 0 mass% or more and 10 mass% or less of strontium oxide (SrO), 0 mass% or more and 10 mass% or less of barium oxide (BaO), 0 mass% or more and 10 mass% or less of titanium oxide ($TiO_2$), 0 mass% or more and 10 mass% or less of zirconium oxide ($ZrO_2$), 0 mass% or more and 5 mass% or less of lithium oxide ($Li_2O$), 0 mass% or more and 5 mass% or less of potassium oxide ($K_2O$), and 0 mass% or more and 5 mass% or less of cesium oxide ($Cs_2O$), and having a total content of the lithium oxide ($Li_2O$), the sodium oxide ($Na_2O$), the potassium oxide ($K_2O$), and the cesium oxide ($Cs_2O$) of 5 mass% or less,
wherein a refractive index of the aliphatic polycarbonate-based resin (A) for light having a wavelength of 589.3 nm is 1.480 or more and 1.520 or less,
wherein a refractive index of the glass filler (B) for light having a wavelength of 589.3 nm is 1.485 or more and 1.520 or less,
wherein a difference in refractive index between the aliphatic polycarbonate-based resin (A) and the glass filler (B)

is 0.003 or less for light having a wavelength of 486.1 nm,
is 0.001 or less for light having a wavelength of 589.3 nm, and
is 0.001 or less for light having a wavelength of 656.3 nm;

wherein the refractive indices are each determined as indicated in Examples of the description and
wherein the refractive index of the glass filler (B) is a value obtained from measurement performed on a test piece in conformity with an immersion method based on the method B of JIS K7142:2014:

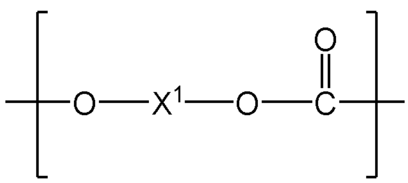
(1)

wherein $X^1$ represents a divalent aliphatic hydrocarbon group having 2 to 20 carbon atoms, or a divalent alicyclic hydrocarbon group having 4 to 22 carbon atoms, and the divalent aliphatic hydrocarbon group and the divalent alicyclic hydrocarbon group may each contain at least one heteroatom selected from an oxygen atom, a nitrogen atom, and a sulfur atom, and/or at least one halogen atom selected from a fluorine atom, a chlorine atom, a bromine atom, and an iodine atom.

**2.** The polycarbonate-based resin composition according to claim 1, wherein the aliphatic polycarbonate-based resin (A) contains 1 mol% or more and 99 mol% or less of the repeating unit (A-1).

**3.** The polycarbonate-based resin composition according to claim 1 or 2, wherein the repeating unit (A-1) comprises one or more selected from the group consisting of repeating units represented by the following general formulae (a-1), (a-2), and (a-3).

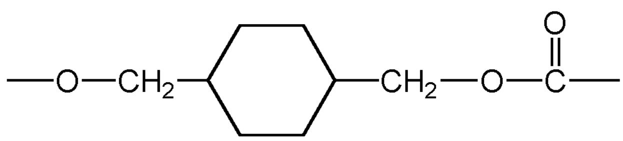
(a-1)

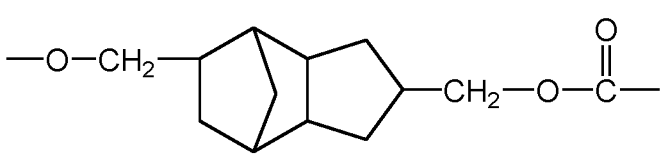
(a-2)

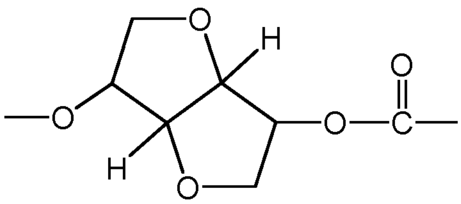

(a-3)

4. The polycarbonate-based resin composition according to claim 3, wherein a ratio of the repeating unit represented by the general formula (a-3) to the repeating unit (A-1) is 40 mol% or more.

5. The polycarbonate-based resin composition according to any one of claims 1 to 4, wherein a total content of the silicon dioxide ($SiO_2$) and the aluminum oxide ($Al_2O_3$) in the glass filler (B) is 67.5 mass% or more and 77.5 mass% or less with respect to an entirety of the glass filler.

6. The polycarbonate-based resin composition according to any one of claims 1 to 5, wherein the glass filler (B) comprises at least one kind selected from the group consisting of glass fibers, glass powder, a glass flake, milled fibers, a glass cloth, and glass beads.

7. The polycarbonate-based resin composition according to any one of claims 1 to 6, wherein the glass filler (B) has an Abbe number (va) of 52.5 or more and 62.5 or less; and
wherein the Abbe number ($v_d$) of the glass filler (B) is a value calculated from the resultant refractive index of the glass filler (B) obtained from measurement performed on a test piece in conformity with an immersion method based on the method B of JIS K7142:2014.

8. The polycarbonate-based resin composition according to any one of claims 1 to 7, wherein the polycarbonate-based resin composition comprises 2 mass% or more and 50 mass% or less of the glass filler (B) with respect to 100 mass% of a total of the aliphatic polycarbonate-based resin (A) and the glass filler (B).

9. The polycarbonate-based resin composition according to any one of claims 1 to 8, wherein a difference in refractive index between the aliphatic polycarbonate-based resin (A) and the glass filler (B) for light having a wavelength of 407 nm is 0.005 or less.

10. The polycarbonate-based resin composition according to any one of claims 1 to 9, wherein a difference in refractive index between the aliphatic polycarbonate-based resin (A) and the glass filler (B) for light having a wavelength of 785 nm is 0.003 or less.

11. A molded body, comprising the polycarbonate-based resin composition of any one of claims 1 to 10.

12. The molded body according to claim 11, wherein the molded body has a total light transmittance of 80% or more and a haze of 10% or less,
wherein the total light transmittance and the haze value of the molded body are determined in conformity with ASTM D1003.

**Patentansprüche**

1. Polycarbonatbasierte Harzzusammensetzung, umfassend:

ein Harz auf Basis eines aliphatischen Polycarbonats (A), das eine durch die allgemeine Formel (1) dargestellte Wiederholungseinheit (A-1) enthält, und
einen Glasfüllstoff (B), der 53 Masse-% oder mehr und 70 Masse-% oder weniger Siliciumdioxid ($SiO_2$), 0 Masse-% oder mehr und 25 Masse-% oder weniger Aluminiumoxid ($Al_2O_3$), 0 Masse-% oder mehr und 10 Masse-% oder weniger Calciumoxid (Ca0), 0 Masse-% oder mehr und 15 Masse-% oder weniger Boroxid ($B_2O_3$), 0 Masse-% oder mehr und 5 Masse-% oder weniger Magnesiumoxid (MgO), 0 Masse-% oder mehr und 5 Masse-% oder weniger Natriumoxid ($Na_2O$), 0 Masse-% oder mehr und 10 Masse-% oder weniger Zinkoxid (ZnO), 0 Masse-% oder mehr und 10 Masse-% oder weniger Strontiumoxid (SrO), 0 Masse-% oder mehr und 10 Masse-% oder weniger Bariumoxid (BaO), 0 Masse-% oder mehr und 10 Masse-% oder weniger

Titanoxid ($TiO_2$), 0 Masse-% oder mehr und 10 Masse-% oder weniger Zirkoniumoxid ($ZrO_2$), 0 Masse-% oder mehr und 5 Masse-% oder weniger Lithiumoxid ($Li_2O$), 0 Masse-% oder mehr und 5 Masse-% oder weniger Kaliumoxid ($K_2O$) und 0 Masse-% oder mehr und 5 Masse-% oder weniger Cäsiumoxid ($Cs_2O$) enthält und einen Gesamtgehalt von Lithiumoxid ($Li_2O$), Natriumoxid ($Na_2O$), Kaliumoxid ($K_2O$) und Cäsiumoxid ($Cs_2O$) von 5 Masse-% oder weniger aufweist,
wobei ein Brechungsindex des Harzes auf Basis eines aliphatischen Polycarbonats (A) für Licht mit einer Wellenlänge von 589,3 nm 1,480 oder mehr und 1,520 oder weniger beträgt,
wobei ein Brechungsindex des Glasfüllstoffs (B) für Licht mit einer Wellenlänge von 589,3 nm 1,485 oder mehr und 1,520 oder weniger beträgt,
wobei eine Brechungsindexdifferenz zwischen dem Harz auf Basis eines aliphatischen Polycarbonats (A) und dem Glasfüllstoff (B)

0,003 oder weniger für Licht mit einer Wellenlänge von 486,1 nm beträgt,
0,001 oder weniger für Licht mit einer Wellenlänge von 589,3 nm beträgt und
0,001 oder weniger für Licht mit einer Wellenlänge von 656,3 nm beträgt,

wobei die Brechungsindizes jeweils wie in den Beispielen der Beschreibung angegeben bestimmt werden und wobei der Brechungsindex des Glasfüllstoffs (B) ein Wert ist, der aus einer Messung erhalten wird, die an einem Prüfling nach einem Immersionsverfahren basierend auf dem Verfahren B von JIS K7142:2014 durchgeführt wurde:

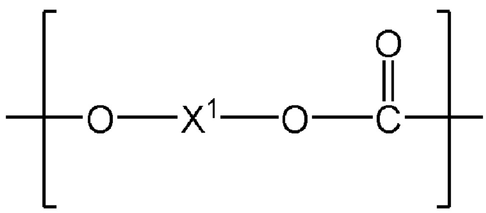
(1)

worin $X^1$ eine zweiwertige aliphatische Kohlenwasserstoffgruppe mit 2 bis 20 Kohlenstoffatomen oder eine zweiwertige alicyclische Kohlenwasserstoffgruppe mit 4 bis 22 Kohlenstoffatomen darstellt und die zweiwertige aliphatische Kohlenwasserstoffgruppe und die zweiwertige alicyclische Kohlenwasserstoffgruppe jeweils mindestens ein Heteroatom, ausgewählt aus einem Sauerstoffatom, einem Stickstoffatom und einem Schwefelatom, und/oder mindestens ein Halogenatom, ausgewählt aus einem Fluoratom, einem Chloratom, einem Bromatom und einem Iodatom, enthalten können.

**2.** Polycarbonatbasierte Harzzusammensetzung gemäß Anspruch 1, wobei das Harz auf Basis eines aliphatischen Polycarbonats (A) 1 mol-% oder mehr und 99 mol-% oder weniger der Wiederholungseinheit (A-1) enthält.

**3.** Polycarbonatbasierte Harzzusammensetzung gemäß Anspruch 1 oder 2, wobei die Wiederholungseinheit (A-1) eine oder mehrere, ausgewählt aus der Gruppe, bestehend aus durch die folgenden allgemeinen Formeln (a-1), (a-2) und (a-3) dargestellten Wiederholungseinheiten, umfasst.

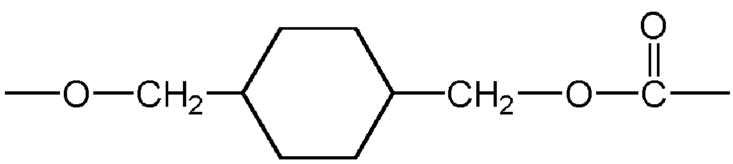
(a-1)

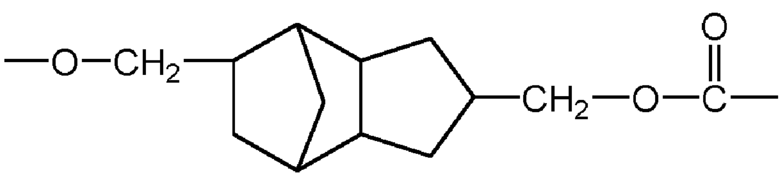
(a-2)

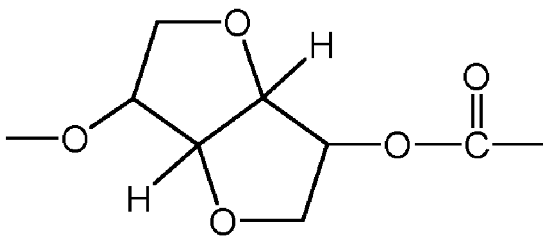

(a-3)

.

4. Polycarbonatbasierte Harzzusammensetzung gemäß Anspruch 3, wobei ein Verhältnis der durch die allgemeine Formel (a-3) dargestellten Wiederholungseinheit zu der Wiederholungseinheit (A-1) 40 mol-% oder mehr beträgt.

5. Polycarbonatbasierte Harzzusammensetzung gemäß einem der Ansprüche 1 bis 4, wobei ein Gesamtgehalt des Siliciumdioxids ($SiO_2$) und des Aluminiumoxids ($Al_2O_3$) in dem Glasfüllstoff (B) 67,5 Masse-% oder mehr und 77,5 Masse-% oder weniger in Bezug auf den gesamten Glasfüllstoff beträgt.

6. Polycarbonatbasierte Harzzusammensetzung gemäß einem der Ansprüche 1 bis 5, wobei der Glasfüllstoff (B) mindestens eine Art, ausgewählt aus der Gruppe, bestehend aus Glasfasern, Glaspulver, einer Glasflocke, gemahlenen Fasern, einem Glasgewebe und Glasperlen, umfasst.

7. Polycarbonatbasierte Harzzusammensetzung gemäß einem der Ansprüche 1 bis 6, wobei der Glasfüllstoff (B) eine Abbe-Zahl ($v_d$) von 52,5 oder mehr und 62,5 oder weniger aufweist und
wobei die Abbe-Zahl ($v_d$) des Glasfüllstoffs (B) ein Wert ist, der aus dem resultierenden Brechungsindex des Glasfüllstoffs (B) berechnet wird, der aus einer Messung erhalten wird, die an einem Prüfling nach einem Immersionsverfahren basierend auf dem Verfahren B von JIS K7142:2014 durchgeführt wird.

8. Polycarbonatbasierte Harzzusammensetzung gemäß einem der Ansprüche 1 bis 7, wobei die polycarbonatbasierte Harzzusammensetzung 2 Masse-% oder mehr und 50 Masse-% oder weniger des Glasfüllstoffs (B) in Bezug auf insgesamt 100 Masse-% des Harzes auf Basis eines aliphatischen Polycarbonats (A) und des Glasfüllstoffs (B) umfasst.

9. Polycarbonatbasierte Harzzusammensetzung gemäß einem der Ansprüche 1 bis 8, wobei eine Brechungsindexdifferenz zwischen dem Harz auf Basis eines aliphatischen Polycarbonats (A) und dem Glasfüllstoff (B) für Licht mit einer Wellenlänge von 407 nm 0,005 oder weniger beträgt.

10. Polycarbonatbasierte Harzzusammensetzung gemäß einem der Ansprüche 1 bis 9, wobei eine Brechungsindexdifferenz zwischen dem Harz auf Basis eines aliphatischen Polycarbonats (A) und dem Glasfüllstoff (B) für Licht mit einer Wellenlänge von 785 nm 0,003 oder weniger beträgt.

11. Formkörper, umfassend die polycarbonatbasierte Harzzusammensetzung nach einem der Ansprüche 1 bis 10.

12. Formkörper gemäß Anspruch 11, wobei der Formkörper einen Gesamtlichttransmissionsgrad von 80 % oder mehr und eine Trübung von 10 % oder weniger aufweist,
wobei der Gesamtlichttransmissionsgrad und der Trübungswert des Formkörpers nach ASTM D1003 bestimmt werden.

**Revendications**

1. Composition de résine à base de polycarbonate, comprenant :

une résine (A) à base de polycarbonate aliphatique contenant un motif de répétition (A-1) représenté par la formule générale (1) ; et
une charge de verre (B) contenant 53 % en masse ou plus et 70 % en masse ou moins de dioxyde de silicium (SiOz), 0 % en masse ou plus et 25 % en masse ou moins d'oxyde d'aluminium ($Al_2O_3$), 0 % en masse ou plus et 10 % en masse ou moins d'oxyde de calcium (CaO), 0 % en masse ou plus et 15 % en masse ou moins d'oxyde de bore ($B_2O_3$), 0 % en masse ou plus et 5 % en masse ou moins d'oxyde de magnésium (MgO), 0 % en masse ou plus et 5 % en masse ou moins d'oxyde de sodium ($Na_2O$), 0 % en masse ou plus et 10 % en

masse ou moins d'oxyde de zinc (ZnO), 0 % en masse ou plus et 10 % en masse ou moins d'oxyde de strontium (SrO), 0 % en masse ou plus et 10 % en masse ou moins d'oxyde de baryum (BaO), 0 % en masse ou plus et 10 % en masse ou moins d'oxyde de titane (TiOz), 0 % en masse ou plus et 10 % en masse ou moins d'oxyde de zirconium (ZrOz), 0 % en masse ou plus et 5 % en masse ou moins d'oxyde de lithium ($Li_2O$), 0 % en masse ou plus et 5 % en masse ou moins d'oxyde de potassium ($K_2O$), et 0 % en masse ou plus et 5 % en masse ou moins d'oxyde de césium ($Cs_2O$), et présentant une teneur totale de l'oxyde de lithium ($Li_2O$), de l'oxyde de sodium ($Na_2O$), de l'oxyde de potassium ($K_2O$) et de l'oxyde de césium (CszO) de 5 % en masse ou moins,
dans laquelle un indice de réfraction de la résine (A) à base de polycarbonate aliphatique pour une lumière présentant une longueur d'onde de 589,3 nm est de 1,480 ou plus et de 1,520 ou moins,
dans laquelle un indice de réfraction de la charge de verre (B) pour une lumière présentant une longueur d'onde de 589,3 nm est de 1,485 ou plus et de 1,520 ou moins,
dans laquelle une différence d'indice de réfraction entre la résine (A) à base de polycarbonate aliphatique et la charge de verre (B)

est de 0,003 ou moins pour une lumière présentant une longueur d'onde de 486,1 nm,
est de 0,001 ou moins pour une lumière présentant une longueur d'onde de 589,3 nm, et
est de 0,001 ou moins pour une lumière présentant une longueur d'onde de 656,3 nm ;

dans laquelle les indices de réfraction sont chacun déterminés comme indiqué dans des Exemples de la description et
dans laquelle l'indice de réfraction de la charge de verre (B) est une valeur obtenue à partir d'une mesure mise en oeuvre sur une pièce d'essai en conformité avec un procédé d'immersion basé sur le procédé B de la norme JIS K7142:2014 :

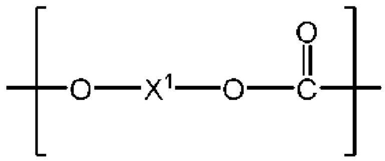

**(1)**

dans lequel $X^1$ représente un groupe hydrocarboné aliphatique divalent présentant 2 à 20 atomes de carbone, ou un groupe hydrocarboné alicyclique divalent présentant 4 à 22 atomes de carbone, et le groupe hydrocarboné aliphatique divalent et le groupe hydrocarboné alicyclique divalent peuvent chacun contenir au moins un hétéroatome sélectionné parmi un atome d'oxygène, un atome d'azote et un atome de soufre, et/ou au moins un atome d'halogène sélectionné parmi un atome de fluor, un atome de chlore, un atome de brome et un atome d'iode.

**2.** Composition de résine à base de polycarbonate selon la revendication 1, dans laquelle la résine (A) à base de polycarbonate aliphatique contient 1 % en mole ou plus et 99 % en mole ou moins du motif de répétition (A-1).

**3.** Composition de résine à base de polycarbonate selon la revendication 1 ou la revendication 2, dans laquelle le motif de répétition (A-1) comprend un ou plusieurs motifs sélectionnés à partir du groupe consistant en des motifs de répétition représentés par les formules générales (a-1), (a-2) et (a-3) suivantes.

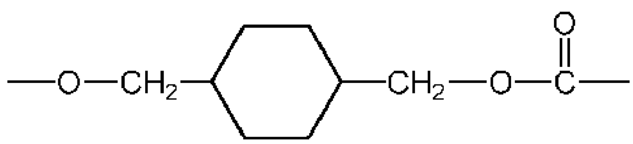

(a-1)

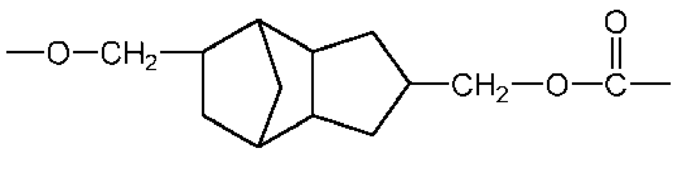

(a-2)

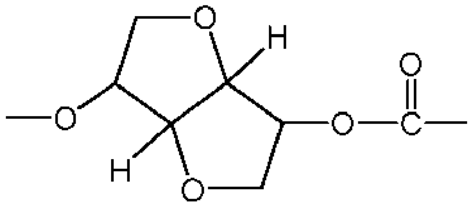

(a-3)

4. Composition de résine à base de polycarbonate selon la revendication 3, dans laquelle un rapport du motif de répétition représenté par la formule générale (a-3) sur le motif de répétition (A-1) est de 40 % en mole ou plus.

5. Composition de résine à base de polycarbonate selon l'une quelconque des revendications 1 à 4, dans laquelle une teneur totale du dioxyde de silicium (SiOz) et de l'oxyde d'aluminium ($Al_2O_3$) dans la charge de verre (B) est de 67,5 % en masse ou plus et de 77,5 % en masse ou moins par rapport à une totalité de la charge de verre.

6. Composition de résine à base de polycarbonate selon l'une quelconque des revendications 1 à 5, dans laquelle la charge de verre (B) comprend au moins un type sélectionné à partir du groupe consistant en des fibres de verre, de la poudre de verre, un flocon de verre, des fibres broyées, une toile de verre et des billes de verre.

7. Composition de résine à base de polycarbonate selon l'une quelconque des revendications 1 à 6, dans laquelle la charge de verre (B) présente un nombre d'Abbe ($v_d$) de 52,5 ou plus et de 62,5 ou moins ; et
dans laquelle le nombre d'Abbe ($v_d$) de la charge de verre (B) est une valeur calculée à partir de l'indice de réfraction résultant de la charge de verre (B) obtenu à partir d'une mesure mise en oeuvre sur une pièce d'essai en conformité avec un procédé d'immersion basé sur le procédé B de la norme JIS K7142:2014.

8. Composition de résine à base de polycarbonate selon l'une quelconque des revendications 1 à 7, dans laquelle la composition de résine à base de polycarbonate comprend 2 % en masse ou plus et 50 % en masse ou moins de la charge de verre (B) par rapport à 100 % en masse d'un total de la résine (A) à base de polycarbonate aliphatique et de la charge de verre (B).

9. Composition de résine à base de polycarbonate selon l'une quelconque des revendications 1 à 8, dans laquelle une différence d'indice de réfraction entre la résine (A) à base de polycarbonate aliphatique et la charge de verre (B) pour une lumière présentant une longueur d'onde de 407 nm est de 0,005 ou moins.

10. Composition de résine à base de polycarbonate selon l'une quelconque des revendications 1 à 9, dans laquelle une différence d'indice de réfraction entre la résine (A) à base de polycarbonate aliphatique et la charge de verre (B) pour une lumière présentant une longueur d'onde de 785 nm est de 0,003 ou moins.

11. Corps moulé, comprenant la composition de résine à base de polycarbonate selon l'une quelconque des revendications 1 à 10.

12. Corps moulé selon la revendication 11, dans lequel le corps moulé présente une transmittance de lumière totale de 80 % ou plus et un trouble de 10 % ou moins,
dans lequel la transmittance de lumière totale et la valeur de trouble du corps moulé sont déterminées conformément à la norme ASTM D1003.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2014069659 A1